# EUROPEAN PATENT SPECIFICATION

(11) **EP 1 313 536 B1**
(45) Date of publication and mention of the grant of the patent: **17.10.2007**
(21) Application number: 01968141.0
(22) Date of filing: 24.08.2001
(51) Int. Cl.: B01D 15/04

(54) **METHOD FOR SEPARATING MULTIVALENT METAL IONS**
VERFAHREN ZUR ABTRENNUNG MULTIVALENTER METALLIONEN
PROCEDE DE SEPARATION D'IONS METALLIQUES MULTIVALENTS

(30) Priority: 28.08.2000 US 228833 P
(43) Date of publication of application: 28.05.2003
(73) Proprietor: Henkel Kommanditgesellschaft auf Aktien, 40589 Düsseldorf (DE)
(72) Inventor: AHMED, Bashir, M., Utica, MI 48316 (US); FRISTAD, William, F., Rochester Hills, MI 48306 (US); KOZAK, William, G., Hatfield, PA 19440 (US)
(74) Representative: Endres, Helmut
(86) International application number: PCT/US2001/026612
(87) International publication number: WO 2002/018029

(56) References cited:
- WO-A-93/18096
- US-A- 5 409 737
- US-A- 5 945 170

## Description

This invention relates to processes for separating from autodeposition compositions dissolved and/or dispersed metal ions having a valence of two or higher (this type of metal ions being briefly denoted hereinafter as "multivalent"), particularly iron and/or zinc cations. Cation-exchange resins are used in the separation process, and the invention also relates to regenerating the cation-exchange resins to their acid form after they have been at least partially loaded with iron and/or zinc cations. This invention is related to the inventions of U.S. 5,393,416 dated February 28, 1995; U.S. 5,409,737, dated April 25, 1995; U.S. 5,554,276, dated September 10, 1996; and U.S. 5,578,199, dated November 21, 1996.

Autodeposition involves the use of an aqueous resinous coating com position, which for brevity is often called a "bath" in the art and hereinafter, of relatively low solids concentration (usually less than about 10 %) to form a coating of relatively high solids concentration (usually greater than about 10 %) on a metallic surface immersed therein, with the coating increasing in thickness and area density (i.e., mass per unit area of coating) the longer the time the metallic surface is immersed in the composition. Autodeposition is somewhat similar to electrodeposition but does not require the aid of externally imposed electrical potential and current to cause the resin particles to deposit on the metal surface.

In general, autodepositing compositions are aqueous acid solutions having solid resin particles dispersed therein in very finely divided form. The coating formed while the metal substrate being coated is immersed in the bath is wet and generally fairly weak, although sufficiently strong to maintain itself against gravity and moderate spraying forces. In this state the coating is described as "uncured". To make an autodeposition coated object suitable for normal practical use, the uncured coating is dried, usually but not necessarily with the aid of heat. The coating is then described as "cured".

Basic constituents of an autodepositing composition are water, resin solids dispersed in the aqueous medium of the composition, and an "activator", that is, an ingredient or combination of ingredients which converts the composition into one which will form on a metallic surface a resinous coating which increases in thickness or areal density as long as the surface is immersed in the composition (at least up to about fifteen minutes, after which the coating may fail to increase further in thickness or areal density). Various types of activators or activating systems are known. The activating system generally comprises an acidic oxidizing system, for example: hydrogen peroxide and HF; HNO₃; a ferric ion containing compound and HF; and other combinations of (i) soluble metal containing compounds such as, for example, silver fluoride, ferrous oxide, cupric sulfate, cobaltous nitrate, silver acetate, ferrous phosphate, chromium fluoride, cadmium fluoride, stannous fluoride, lead dioxide, and silver nitrate, in an amount between about 0.025 and about 50 grams of the metal containing compound per liter of the total autodeposition bath (a concentration unit that may be applied hereinafter to any solute or dispersate in any liquid and hereinafter is usually abbreviated as "g/l"), with (ii) one or more acids such as hydrofluoric, sulfuric, hydrochloric, nitric, and phosphoric acids and strong organic acids such as, for example, trichloroacetic acid.

The currently most preferred autodeposition baths contain dispersed negatively charged coating resin particles with sodium cations as their monovalent metal counterions. Also, most metallic substrates on which an autodeposited coating is to be formed are cleaned with an alkaline cleaner, which usually also contains sodium ions, before the substrates are contacted with an autodeposition bath, and additional sodium ions are consequently introduced into the autodeposition bath by drag-in of residual cleaning bath constituents, even though at least one rinsing is usually provided to reduce such drag-in. Accordingly, the description below will generally be phrased in terms of sodium ions as the monovalent metal cation portion of the autodeposition bath. However, it should be understood that, *mutatis mutandis,* the description is equally applicable to other monovalent metal cations.

The use of autodeposition to coat metal objects containing iron and/or zinc causes some dissolution of the objects and therefore normally increases the concentrations of one or both of these ions in the coating bath. (it is logically conceivable, although never to the knowledge of the applicants observed in practice, for all of the dissolved metal cations to be bound into the autodeposited film and therefore not to increase the concentration of such cations in the bath.) Increased concentrations of these ions, if sufficiently large, cause the baths to produce unsatisfactory coatings or even to coagulate and become unusable. Removal of these accumulating metal ions is therefore necessary to permit prolonged satisfactory use of an autodeposition bath.

U. S. Patent 3,839,097 issued October 1, 1974 to Hall et al. (hereinafter referred to as "the Hall patent", "the Hall reference", or simply "Hall") teaches the stabilization of autodeposition baths by removing metal ions therefrom with an ion-exchange resin, then regenerating the ion-exchange resin by treating it with an aqueous solution of a strong acid. This reference teaches that removal of multivalent metal cations from an autodeposition bath by use of a cation-exchange resin should be supplemented by addition of dispersing agent selected from the group consisting of cationic and amphoteric surfactants and protective colloids to the bath before the bath is contacted with a cation-exchange resin, in order to avoid the development of a grainy or textured appearance of the coatings formed by the bath on metal substrates after the bath has been in contact with a cation-exchange resin. Subsequent experience in the art showed that this process was not practical as taught, because addition of the dispersing agents required to avoid development of a grainy or textured appearance caused the entire autodeposition bath to become unusable within a few days as a consequence of irreversible settling of much or all of the originally dispersed resin solids.

Within the last several years it was discovered that the need to add dispersing agents as taught by the Hall reference to autodeposition baths before contacting them with cation-exchange resins can be avoided by using cation-exchange resins with "weaker" (i.e., less completely ionized) acid moieties than those present in the sulfonic acid resins taught by Hall. Iminodiacetate type resins are particularly preferred. Effective removal of multivalent cations and long term use of autodeposition baths by this method has been demonstrated in successful commercial use. However, further improvements in efficiency and lowering of costs of the ion removal process are desired in the art. In particular, the iminodiacetate type resins cost about ten times as much as sulfonic acid ion-exchange resins and have a lower capacity. Furthermore, a major disadvantage of the autodeposition bath purifying processes of the prior art is their inability to selectively remove zinc cations when iron cations are present. The removal of zinc from the autodeposition bath is necessary when coating galvanized parts, as zinc builds up in the bath.

US 5 945 170 describes a process to remove dissolved multivalent cations such as iron and zinc from used autodeposition compositions by the use of selected cation exchange resins without the need for added surfactants. The preferred type of ion exchange resin, when iron is the primary metal ion to be removed, is one having iminodiacetate functional groups. For the selective removal of zinc ions from autodeposition baths containing both iron and zinc ions the most preferred type of ion exchange resin is a gel type of resin with sulfonic acid functional groups attached to some of the phenyl rings in a styrene-divinyl benzene copolymer resin matrix.

Two general "structural" types of ion-exchange resins are recognized in the art: gel resins and macroporous or macroreticular resins. The fundamental difference between these two types is that gel resins have a substantially homogeneous density on a microscopic scale, while macroporous resins, as would be expected from their name, contain void pores into the interior of the smallest particles of resin commercially used. These pores normally have average diameters of about 5.0 to 50 nanometres (this unit of length being hereinafter usually abbreviated as "nm"). As a result, a cube with a length of 1.0 nm on each side in a macroporous resin could have essentially no density if it were all within one of the pores. Gel ion-exchange resins, on the contrary, do not contain any pores as large as those typical in macroporous ion-exchange resins and consequently are essentially impermeable, except by a liquid that can swell the gel network of the gel type ion-exchange resins and relatively small molecules that are dissolved in such a swelling liquid. A practical, although not fundamental, distinction between these two types of ion-exchange resins is that gel resins when dry are usually transparent or at least translucent and macroporous resins when dry usually are opaque.

Accordingly, a major object of this invention is to provide a process that:
- includes at least one operation of cation-exchange that removes multivalent metal ions from an autodeposition bath that contains such multivalent metal ions (and that almost always also contains monovalent metal ions), without addition of any material selected from the group consisting of
   (i) cationic surfactants,
   (ii) amphoteric surfactants that act effectively as cationic surfactants at the pH value prevailing in the autodeposition bath, and
   (iii) protective colloids
      to the autodeposition bath;
- allows the autodeposition baths thus regenerated by removal of some multivalent metal ions to deposit on a suitable substrate an autodeposited coating that is not grainy/textured; and
- has lower overall costs compared with current commercial processes using chelating type cation-exchange resin with weak acid type cation-exchange moieties.

Non-exclusive examples of such cost savings include: Allowing use of a lower cost type of cation-exchange resin than the weak acid types; reducing the cost, amount, and/or environmental and personal hazard of the regenerant and/or rinsing materials required for the process; increasing the productivity of the process, i.e., the capacity of the ion-exchange resin in moles of multivalent metal cations per unit volume of resin divided by the total time interval between regenerations of the volume of ion-exchange resin; and decreasing the size of the equipment required for processing a fixed volume of autodeposition bath. Another major object is to provide process equipment especially adapted to performing such a process. Other more detailed objects will become apparent from the description below.

### BRIEF SUMMARY OF THE INVENTION

It has been discovered that the grainy/textured type of surface produced, as taught by Hall, by autodeposition baths that have previously been in contact with strong acid ion-exchange resins and have not been protected before such contact by addition of particular dispersing agents can be avoided by selecting a gel type cation-exchange resin rather than a macroporous type and by controlling the time during which any particular part of the autodeposition baths remains in contact with the ion-exchange resin. Process equipment is provided for carrying out the various steps of the process. The process equipment includes a central processing unit (hereinafter usually abbreviated as "CPU") controller which holds a program for the entire process.

### BRIEF DESCRIPTION OF THE DRAWINGS

Figures 1 A and 1 B set forth in a table steps that may be performed in carrying out the invention;
Figures 2A and 2B are a table of bed volumes (hereinafter usually abbreviated as "BV's") of water and bath that may be used in the first eighteen steps of Figures 1 A and 1B;
Figure 3 is a schematic representation of apparatus for removing iron and zinc cations from an autodeposition bath in accordance with the invention;
Figure 4 illustrates the activation system for the valves and pumps in Figure 3; and
Figure 5 shows the signals going to and from a controller that is part of the apparatus illustrated in Figures 3 and 4.

### DETAILED DESCRIPTION OF THE INVENTION AND PREFERRED EMBODIMENTS

Except in the claims and the operating examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred, however. Also, throughout the description, unless expressly stated or necessarily implied by the context to the contrary: percent, "parts of", and ratio values are by weight or mass; the term "polymer" includes "oligomer", "copolymer", "terpolymer" and the like; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description or of generation *in situ* within the composition by chemical reaction(s) noted in the specification between one or more newly added constituents and one or more constituents already present in the composition when the other constituents are added, and does not necessarily preclude unspecified chemical interactions among the constituents of a mixture once mixed; in particular, dissolved chemical species may and usually will be described as "metal cations" if they (i) contain a metallic element and (ii) are introduced into the solution by dissolution therein of at least one salt containing metal cations or by dissolution from an elemental metallic solid, even if the metal cations are known or believed to be likely to associate in solution with coordinate complexing agents that may be negatively charged, so that the species called a metal cation may in fact be anionic; specification of constituents in ionic form additionally implies the presence of sufficient counterions to produce electrical neutrality for the composition as a whole and for any substance added to the composition; any counterions thus implicitly specified preferably are selected from among other constituents explicitly specified in ionic form, to the extent possible; otherwise such counterions may be freely selected, except for avoiding counterions that act adversely to an object of the invention; the word "transferred" and its grammatical variations, when used to describe change in status of ions from dissolved or dispersed in an autodeposition bath to being bound to an ion-exchange resin or *vice versa,* mean "net transferred" and its corresponding grammatical variations (in other words, it is expected from kinetic-molecular theory that any individual ion may transfer back and forth between being dissolved in the autodeposition bath and being bound to the cation-exchange resin many times during any period of minutes or more of contact between the autodeposition bath and the cation-exchange resin, but only those cations transferred to the cation-exchange resin from the bath, or the reverse, in excess over the numbers of the same chemical type of cations that may be back-transferred during the same time period, are considered to be "transferred" for purposes of this description); the word "mole" means "gram mole", and the word itself and all of its grammatical variations may be used for any chemical species defined by all of the types and numbers of atoms present in it, irrespective of whether the species is ionic, neutral, unstable, hypothetical, or in fact a stable neutral substance with well defined molecules; and the terms "solution", "soluble", "homogeneous", and the like are to be understood as including not only true equilibrium solutions or homogeneity but also dispersions that show no visually detectable tendency toward phase separation over a period of observation of at least 100, or preferably at least 1000, hours during which the material is mechanically undisturbed and the temperature of the material is maintained within the range of 18 - 25 °C.

When an autodeposition bath containing dissolved zinc and/or iron cations, coating resin polymer and its associated anionic dispersing agent, activator (which preferably does not include any monovalent cations except aquated protons), and sodium cations and, optionally, dispersed solid pigment such as carbon black is brought into contact with a cation-exchange resin in its acid form, at least the following more or less distinct spatial zones are believed to coexist: a liquid phase that is the continuous phase of the autodeposition bath; solid ion-exchange active polymer, in the swollen interior of the beads; ion-exchange resin solid surface in contact with bulk solution, at which a Donnan exclusion layer forms; latex particle surfaces, around which there is an electrical double layer comprising surfactant anions (or their functional equivalent, anionic regions of a "self-emulsified" latex) and sodium cations; and the interiors of the latex particles, which are relatively non-porous and inert polymer; and, if a pigment is present, also pigment particle surfaces, with their own electrical double layers surrounding them, and the pigment particle interiors, usually relatively non-porous inert solids. If the contact is maintained for even a few milliseconds, some of each kind of cations, other than aquated protons, present in the continuous liquid phase and the electrical double layer(s) around the latex particles and the pigment if present are believed be transferred to the Donnan layer around the ion-exchange resin particles or to the liquid-swollen solid parts of the ion-exchange resin particles themselves. The total electrical charge of all the cations so transferred will be matched by the total charge on a number of aquated protons transferred from one of the zones within or around the ion-exchange resin particles to one of the other zones. If too many of the sodium cations are thus exchanged for aquated protons, these will become the only counterions for at least part of the negative charge centers in the dispersed micelles of polymer resin solids. Experience has indicated that having aquated protons alone as counterions does not form an adequately stabilized dispersion for long term use. However, it has been found that a fraction of the original sodium counterions can be replaced by aquated protons without development of any irreversible undesirable changes in the autodeposition bath.

In most conventional practice of ion-exchange, including the teachings of the above-cited Hall patent and the recent commercial use of iminodiacetate cation-exchange resin to extract multivalent metal ions from used autodeposition baths, the flow rate through the cation-exchange resin contact zone of the liquid containing cations to be exchanged is slow enough that it is believed that the liquid that contains cations to be exchanged comes to at least approximate equilibrium with the ion-exchange resin used, i.e. the net exchange of ions between the bath liquid in the column and the entire volume of ion-exchange resin is nearly complete. (The total volume of cation-exchange resin used in an ion-exchange zone in a process according to this invention is measured when needed by allowing the resin particles in their sodium form, wet with a suitable liquid, to settle into a bed in a container under the influences of natural gravity and gentle tapping or vibration of the container, and then discontinuing any net flow of liquid through the bed. The minimum bulk container volume required to contain the amount of ion-exchange resin used under such conditions is taken as the volume of the ion-exchange resin for purposes of any quantitative descriptions of the volume of ion-exchange resin herein and is hereinafter usually denoted as the "bed volume".) For example, a liquid flow rate of 12 bed volumes per hour is suitable for extracting multivalent metal ions from an autodeposition bath by an ion-exchange process using iminodiacetate type ion-exchange resins.

Because weak acid ion-exchange resins bind relatively weakly to monovalent cations such as sodium, in the presence of more strongly bound multivalent cations, such as the iron and, sometimes, zinc cations present in most used autodeposition baths, only a relatively small fraction of the sodium that would be required to provide counterions for all of the dispersing agent in the autodeposition bath is believed to be bound to a weak acid (e.g., iminodiacetate) type ion-exchange resin, even at apparent equilibrium. Therefore, when a used autodeposition bath that contains iron and/or zinc cations and coating resin dispersed with an anionic dispersing agent having sodium counterions is brought into contact with a weak acid type of cation-exchange resin in its completely acid form and allowed to remain in contact with the ion-exchange resin long enough to closely approach equilibrium distribution of all the ionic species among the various phases present, a sufficient concentration of sodium ions is believed to remain in the continuous phase of the autodeposition bath to constitute the counterions for enough of the anionic dispersing agent to avoid any aggregation of the dispersed resin particles that would result in grainy/textured coatings and/or substantial loss of coating resin from dispersed phase to any separate phase formed by settling or coagulation.

With less expensive, higher capacity, strong acid type cation-exchange resins, such as the sulfonic acid types that were used by Hall as cited above, the difference in binding effectiveness of the cation-exchange resin with monovalent and multivalent metal cations is apparently much less than with weak acid type ion-exchange resins, because it has been found that when a conventional used autodeposition bath is equilibrated with a suitable volume of strong acid type ion-exchange resin particles in order to extract a specified fraction of the iron and/or zinc ions dissolved in the used autodeposition bath, there is considerably less sodium in the autodeposition bath after extraction than if the same fraction of iron and/or zinc is extracted from a used autodeposition bath of the same composition by equilibrating it with a suitable volume of weak acid type ion-exchange resin particles. Although the invention claimed is not bound by any theory, it is believed that this "excessive" removal of sodium is the reason why extraction of iron and/or zinc from used autodeposition baths as taught by Hall as cited above led to grainy, textured surfaces rather than smooth ones, aquated protons apparently not being as effective counterions as sodium cations in preventing aggregation of the latex particles to produce larger particles that are bound into the wet autodeposited coating and result in the grainy texture after drying. The use of cationic surfactant is believed to have temporarily reduced the transfer of sodium cations by competing with them to be transferred to the ion-exchange resin particles, but after several days or weeks the cationic surfactant is believed to have replaced the sodium as counterions in the electrical double layer around the latex particles and to have proved to be even less effective in preventing aggregation than aquated protons had been, eventually leading to massive flocculation of the latex from the autodeposition bath.

However, it has now been found, and forms the basis of this invention, that, when the contact time between particular volumes of used autodeposition bath and of strong acid gel type ion-exchange resins is limited, the relative fractions of iron, zinc, and sodium cations transferred from a used autodeposition bath to the ion-exchange resin particles can be significantly altered from the relative fractions among these ions transferred at or near equilibrium. More particularly, a practically useful amount of iron, and of zinc if zinc cations are present in the used autodeposition bath, can be transferred to the ion-exchange resin particles, before sufficient sodium is transferred to irreversibly destabilize the autodeposition bath.

Accordingly, in this invention, iron cations and/or zinc cations are selectively removed from an autodeposition bath by passing the bath in one direction through a fixed volume of a gel type cation-exchange resin having exchangeable strong acid cations at a sufficiently high rate of passage that the volume of autodeposition bath passing through the fixed volume of the strong acid cation (hereinafter usually abbreviated as "SAC") ion-exchange (hereinafter usually abbreviated as "IEX") resin in one hour is at least 24 times greater than the fixed volume of SAC IEX resin. Under most circumstances, flow of the bath in one direction through the fixed volume of cation-exchange resin is most conveniently and therefore preferably accomplished by circulating the fixed volume of autodeposition bath between the fixed volume of SAC IEX resin and a tank for the autodeposition bath, this bath tank not containing any of the fixed volume of cation-exchange resin.

After a suitable amount of iron and/or zinc has been transferred from autodeposition bath to the fixed volume of cation-exchange resin, in order to continue effectively using the cation-exchange resin it must be regenerated. To accomplish regeneration, further contact between the cation-exchange resin and autodeposition bath is temporarily suspended; the cation-exchange resin preferably is rinsed with a suitable aqueous liquid, normally preferably purified water, and then contacted with a regenerating acidic aqueous liquid. Contact of the iron and/or zinc loaded cation-exchange resin with this regenerating acid aqueous liquid causes most or all of the iron and zinc bound to the cation-exchange resin to be displaced from the cation-exchange resin into the regenerating acidic aqueous liquid and replaced on the cation-exchange resin by hydrogen cations. After a sufficient fraction of the binding sites of the cation-exchange resin have been reloaded with hydrogen cations, contact between the cation-exchange resin and the regenerant acidic aqueous liquid is suspended; the cation-exchange resin preferably is again rinsed with a suitable aqueous liquid, normally preferably purified water, and is then ready for contact with autodeposition bath again.

In order to assure thorough rinsing, when distilled, deionized, or similarly purified water is used as a rinse liquid for the cation-exchange resin as is normally preferred, rinsing preferably is continued until the effluent rinse liquid has an electrical conductivity that is not more than, with increasing preference in the order given, 1000, 500, 250, 125, 100, 90, 80, 70, 60, or 50 microSiemens (hereinafter usually abbreviated as "µS").

Once any particular volume of SAC IEX resin has begun to be used in a process according to this invention, the resin preferably is not allowed to dry until no further use of it in the process according to the invention is expected. One reason for this preference is that alternating drying and swelling of the resin will eventually cause its disintegration into particles that are smaller than optimum and may be lost through liquid permeable walls that are designed to confine the solid resin within a particular portion of space. Another reason is that swelling of dried resin is a slower process than interchange of dissolved constituents between already swollen resin and an aqueous solution with which the swollen resin beads are brought into contact.

In accordance with this preference, once any cation-exchange resin used in a process according to the invention has been rinsed, the resin is preferably left in contact with a sufficient amount of the rinse liquid to preclude drying the resin. This means that, when moving from an operation of a process according to this invention in which the cation-exchange resin has been rinsed to one in which the rinsed cation-exchange resin is to be contacted with an autodeposition bath from which some undesired constituents are to be removed while other constituents are preserved for re-use, the initial liquid flowing out of the fixed volume of cation-exchange resin when autodeposition bath begins to flow into this fixed volume is not the desired rejuvenated autodeposition bath but primarily displaced rinse liquid. It is therefore advantageous and preferred in a process according to the invention to keep track of the volume of rinse liquid remaining in contact with the fixed volume of cation-exchange resin used when autodeposition bath begins to be introduced into this fixed volume, and only after a volume of effluent liquid approximately equal to the volume of retained rinse liquid has flowed out of the fixed volume of cation-exchange resin to begin collecting any material to be reused as rejuvenated autodeposition bath.

Preferably, the cation-exchange resin used in a process according to this invention has at least one, more preferably more than one, and most preferably all, of the following characteristics:
- the resin has the geometrical form of rounded, approximately spherical, "beads";
- the resin particles have sizes such that:
   -- a first sieve having openings of uniform size and shape can be selected so that the first sieve will retain not more than 40 % of the mass of a random sample containing at least one thousand of the resin particles, the remaining resin particles being sufficiently small to pass through said openings of the first sieve;
   -- a second sieve having openings of uniform size and shape can be selected so that not more than 10 % of the mass of a random sample containing at least one thousand of the resin particles are sufficiently small to pass through said openings in the second sieve; and
   -- the ratio of the longest linear dimension of said openings in the first sieve to the longest linear dimension of said openings in said second sieve, both longest linear dimensions being measured in the same units, is not greater than, with increasing preference in the order given, 2.00:1.00, 1.90:1.00, 1.80:1.00, 1.70:1.00, 1.60:1.00, 1.50:1.00, 1.40:1.00, 1.35:1.00, 1.30:1.00, 1.25:1.00, or 1.20:1.00 (this ratio is sometimes called the "uniformity coefficient" of the IEX by manufacturers, and IEX beads with a maximum uniformity coefficient not more than 1.2:1.0 are called "monobeads" by some manufacturers);
- the mean particle size of the resin particles is at least, with increasing preference in the order given, 0.25, 0.35, 0.45, 0.50, 0.54, or 0.58 millimeter (hereinafter usually abbreviated as "mm") and independently preferably is not more than, with increasing preference in the order given, 1.5, 1.3, 1.1, 0.90, 0.80, 0.75, 0.71, or 0.68 mm;
- the exchange sites are sulfonic acid moieties and are grafted onto a styrene and/or divinyl benzene polymer gel; and
- the moisture holding capacity of the IEX in its hydrogen form is at least, with increasing preference in the order given, 25, 30, 35, 38, 41, 43, 45, 47, or 49 % and independently preferably is not more than, with increasing preference in the order given, 85, 75, 65, 62, 59, 57, or 55 %.
   The moisture holding capacity of the IEX is defined as [100-(*M_{d}*/*Mₘ*)], where *Mₘ* represents the mass of a representative sample of the IEX in equilibrium with air having 100 % relative humidity at a pressure that is 53"3 millibars less than the prevailing atmospheric pressure and *M_{d}* represents the mass, measured in the same units as *Mₘ*, of the same representative sample after it has been dried for at least 12 hours in an oven at 105±2 °C, then allowed to cool in a desiccator before the mass is determined.

The primary reason for a preference for beads of a narrow particle size distribution is believed to arise from the fact that such beads have a lower maximum packing density than any other geometrical form in which suitable cation-exchange resins are commercially available. The lower packing density is believed to reduce the pressure required to maintain flow through a bed of the beads and to reduce the danger of plugging of this flow. The preferences for the size of the resin beads are based on convenience in handling, particularly on a large scale: If the size is too small, the beads will be more readily lost during back-flushing, while if the size is too large, either a very fast flow rate, with attendant higher pumping costs, will be needed for back-flushing, or the back-flushing time will have to be extended, incresing the capital investment cost of the process.

The preference for a resin with a moderate degree of moisture holding capacity is believed to arise from the more rapid access of liquid passed through the packed cation-exchange resin to all of the actual ion-exchange sites in the cation-exchange resin: Some of these sites are within the interior of the beads, and if the polymer matrix for these ion-exchange sites has too low a moisture holding capacity, the matrix will not be able to swell with liquid sufficiently to promote facile transfer of the exchangeable cations between the cation-exchange resin and liquids brought into contact with it. On the other hand, if the moisture holding capacity is too high, the cation-exchange resin beads will be susceptible to rapid attrition when they are backflushed, as a result of their collisions with each other under back-flushing conditions.

The preference for a gel type resin over a macroporous one is believed to arise from reduced access of the dispersed latex resin particles, and consequently of their sodium counterions, to the ion-exchange sites within the interior of the resin beads. Many or all of the channels for passage of liquid in a water-swollen gel type ion-exchange resin particle may be too narrow to pass most micelles of the dispersed polymer solids but still large enough to pass most cations that are not restricted in motion by being part of the electrical double layer around large anions.

Suitable commercial examples of preferred types of cation-exchange resins include: AMBERJET® 1200 and AMBERLITE® IR-120, IR-122, and 132 E ion-exchange resins from Rohm and Haas Co.; DIAION™ SK 1 B and SK 110 ion-exchange resins from Mitsubishi Chemical Industries; DOWEX® HCR-W2, HCR-S, and TG650C ion-exchange resins from Dow Chemical Co.; IONAC^{™} C-240, C-242, C-249, C-250, C-253, C-255, C-257, C-258, C-267, C-298 C (H), and CF ion-exchange resins from Sybron Chemical Co.; LEWATITT® S 100, S 100LF, SC 102, SC 102 BG, SC 104, SC 104 WS, SC 108, and S 109 ion-exchange resins from Bayer; WOFATIT™ KPS, KPS-DS, KPS-AF, KPS-MB, RH, RK, FK-2 and FK-4 ion-exchange resins from VEB Chemiekombinat Bitterfeld; and PUROLITE™ C-100, C-100 E, C-100 X 10, and C-120 E from Purolite International. It is expected that other products of the same type would be equally satisfactory.

Cation-exchange resins such as those described above are commonly supplied commercially In either their acid or their sodium form. Before using cation-exchange resin supplied in its sodium form in a process according to this invention for extracting multivalent metal ions from autodeposition baths, it is highly preferred to convert the cation-exchange resin into the acid form, in order to avoid the generally undesired introduction of sodium ions into the baths in a concentration larger than that needed to provide counterions for the anionic dispersing agents present in the bath. This conversion to the acid form may be accomplished by means known *per se* in the art, for example by treatment with any adequately strong acid.

After conversion of the cation-exchange resin to the acid form, it is preferred to rinse the acid form resin with water, preferably deionized, distilled, or otherwise purified water, before using it for extracting multivalent metal ions from an autodeposition bath, even if the acid used to put the ion-exchange resin into the acid form is the same as the one used in the autodeposition composition to be treated with the bath. The reason for this preference is that experience has shown that the amount of acid remaining in contact with a wet bed of acid form ion-exchange resin, when practical concentrations of aqueous acid are used to put the ion-exchange resin into acid form, is usually in excess of the amount needed to replenish the amount of acid consumed, during the coating process, from the used autodeposition composition to be contacted with the acid form ion-exchange resin for removal of multivalent metal ions. Therefore, if there is no rinsing before using the acid form ion-exchange resin, more acid than is needed will be introduced into the autodeposition composition, so that it will eventually become unsuitable for use for that reason.

The flow rate, through a bed or other volume of the ion-exchange resin used, preferably is at least, with increasing preference in the order given, 27, 30, 33, 36, 39, 42, or 45 bed volumes of used autodeposition bath per hour of flow of the used autodeposition bath through a zone of contact with the SAC IEX resin initially in its acid form, this flow rate unit being hereinafter usually abbreviated as "BV/hr".

While the invention is not to be understood as limited by any theory, it is believed that rapid flow prevents the transfer to the ion-exchange resin of a substantial fraction of the amount of sodium ions that would be bound to the ion-exchange resin at equilibrium or at lower flow rates, so that little or no de-emulsification of the coating resin in the autodeposition bath occurs, and any de-emulsification that may occur can be reversed, as considered further below.

A preferred and convenient method of obtaining flow in one direction through a fixed volume of IEX resin is to confine the IEX resin in a container through which liquid can flow without loss of any of the IEX resin from the container and which is provided with at least one inlet and at least one distinct outlet for flow of liquid. A conventional IEX column is one example of such a container and is often preferred in a process according to this invention. Therefore, the term "IEX column" is often used below, but this should not be construed to imply that any container actually used must always have a columnar form to fall within the scope of the invention.

Instead of only one inlet and one outlet, a suitable container for this purpose may have many openings that are permeable to liquid but not to the solid SAC IEX confined within the container and may have almost any shape. For example: the fixed volume of IEX resin could be confined in the shape of a rectangular prism between two vertically oriented porous plates and two solid sidewalls, with flow through the fixed volume of IEX resin being in a horizontal rather than a vertical direction; the fixed volume of IEX resin could be in the shape of a hollow cylinder confined between two porous walled concentric cylindrical surfaces, with liquid flowing in through the smaller central cylindrical surface and out through the larger cylindrical surface, or vice versa. The fundamental characteristics required for a preferred container are that:
- the container has a set, which may have a single member or a plurality of members, of first liquid permeable openings therein, and a distinct set, which may have a single member or a plurality of members, of second liquid permeable openings therein;
- said sets of first and of second liquid permeable openings are mutually exclusive sets, (i.e., any member of the first set is not a member of the second set, and any member of the second set is not a member of the first set);
- a flow of liquid at a constant rate successively into the container through said set of first liquid permeable openings, into contact with said volume of said cation-exchange resin confined within the container, and out from the container through said set of second liquid permeable openings can be maintained by means for causing liquid flow, without thereby displacing any of solid cation-exchange resin from its container.

For efficiency, it is further preferred that the flow path of liquid through a container as described above for the cation-exchange resin should cause the liquid to contact all parts of the fixed volume of cation-exchange resin confined in the container. This type of flow is achieved in a conventional IEX column, in which liquid is normally introduced over the entire upper flat area of the solid cylindrical shape in which the beads of cation-exchange resin are confined, and in which liquid flows out over the entire bottom flat area of the same solid cylindrical shape. Liquid flow that reasonably efficiently makes use of the entire fixed volume of cation-exchange resin confined within a cylindrical container of this type is also achieved if liquid is introduced at the bottom and collected from the top of the cylindrical shape of the cation-exchange resin bed. Reasonably efficient liquid flow in this sense is also achieved by the two alternative cation-exchange resin bed shape examples and their corresponding containers as described above.

It is ordinarily preferred that the flow rate of liquid into any container of cation-exchange resin used in a process according to this invention be substantially equal to the flow rate of liquid out of the same container. The flow rate out from a container is defined as "substantially identical" to the flow rate into said container when both of the following conditions are satisfied:
(i) there is no mechanical damage to the container from accumulation of excess liquid therein and
(ii) at least, with increasing preference in the order given, 40, 60, 75, 85, 90, 95, or 99 % of the bed volume of the cation-exchange resin is filled by the solid cation-exchange resin itself or by liquid (which may contain some dissolved gas), rather than by gas only.

It has been found that, at the concentrations at which iron, zinc, and sodium cations are normally present in autodeposition baths, the speed with which the SAC resin binds the ions is in the order Fe>Na>Zn, so that the iron is first removed, and since the concentration of iron cations generally exceeds that of sodium cations and greatly exceeds that of zinc ions, the iron cations are predominantly removed. Therefore, when removal of iron cations is at least one of the goals of a process according to the invention, the process is preferably used by flowing just sufficient used autodeposition bath, generally 8 to 30 BV's, through the IEX column at a preferred flow rate as described above, in what is called a "kinetic" mode of operation, to bind the exchange sites of the ion-exchange resin to iron and sodium cations. (The removal of some sodium cations is inevitable and can be advantageous, because sodium usually builds up in the bath gradually as drag-in from at least one alkaline cleaner used to clean metal substrates before they are brought into contact with the autodeposition bath.) After a practically useful quantity of iron has thereby been bound to the exchange sites of the IEX, the column is then usually regenerated.

Accordingly, one major preferred embodiment of the invention, in which rejuvenation of a used autodeposition bath by removal of some dissolved iron from the used autodeposition bath is the primary goal, comprises operations of:
(I) providing a known volume of used autodeposition bath that comprises dissolved iron cations and does not comprise a concentration of dispersing agents selected from the group consisting of cationic surfactants, amphoteric surfactants, and protective colloids that would cause the used autodeposition bath to become unstable within 1000 hours;
(II) providing (i) a known volume of solid strong acid gel type cation-exchange resin having hydrogen cations capable of exchanging with other cations and (ii) a preferred container as described above in which said known volume of cation-exchange resin is confined together with and In contact with a known volume of an aqueous based liquid that has concentrations of dissolved iron and zinc cations that are not larger than the concentrations of dissolved iron and zinc cations in said used autodeposition bath;
(III) causing:
   (1) said known volume of the used autodeposition bath provided in operation (I) to flow, at a rate of at least 24 BV/hr referred to the volume of cation-exchange resin provided in operation (II), at least once through the set of first liquid-permeable openings into the container provided in operation (II) and into contact with the cation-exchange resin confined therein, so that the concentration of iron cations in the thus contacted autodeposition bath is reduced from its value in the used autodeposition bath provided in operation (I), thereby converting the used autodeposition bath into first iron-cation-content-reduced used autodeposition bath; and, simultaneously,
   (2) a permeate liquid to flow out from the container provided in operation (II) at a flow rate that is substantially identical to the flow rate of used autodeposition bath into said container in part (1) of this operation, said permeate liquid initially consisting of displaced said aqueous based liquid as provided in operation (II)(ii) that has been displaced by the inflow of used autodeposition bath in operation (III)(1) hereof but subsequently, after a volume of outflow equal to said known volume of said aqueous based liquid as provided in operation (II)(ii) has occurred, consisting of said first iron-cation-content-reduced used autodeposition bath, the flow described in parts (1) and (2) of this operation being continued, optionally with one or more interruptions of the flow and/or with one or more iterations of the flow, in any first such iteration:
      - first iron-cation-content-reduced used autodeposition liquid being caused to flow in a part (1.1) of this operation, said part (1.1) being identical to part (1) hereof except that first iron-cation-content-reduced used autodeposition bath is caused to flow into the container in lieu of the used autodeposition bath in part (1) and is converted to second iron-cation-content-reduced used autodeposition bath; and
      - second iron-cation-content-reduced used autodeposition bath being caused to flow in a part (2.1) of this operation, said part (2.1) being identical to part (2) hereof except that second iron-cation-content-reduced used autodeposition bath is substituted in lieu of the first iron-cation-content-reduced used autodeposition bath;
         in any *n*'th such iteration after said first iteration, n being an integer greater than 1:

      - n'th iron-cation-content-reduced used autodeposition liquid being caused to flow in a part (1.*n*) of this operation, said part (1.*n*) being identical to part (1) hereof except that n'th iron-cation-content-reduced used autodeposition bath is caused to flow into the container in lieu of the used autodeposition bath in part (1) and is converted to (*n*+1)'th iron-cation-content-reduced used autodeposition bath; and
      - (*n*+1)'th iron-cation-content-reduced used autodeposition bath being caused to flow in a part (2.n) of this operation, said part (2.n) being identical to part (2) hereof except that (*n*+1)'th iron-cation-content-reduced used autodeposition bath is substituted in lieu of the first iron-cation-content-reduced used autodeposition bath;
         until there has occurred a transfer of iron cations from solution in the used autodeposition bath to binding to said cation-exchange resin, thereby converting the used autodeposition bath to rejuvenated autodeposition bath.

Ordinarily, it is further and independently preferable to choose a target maximum value for iron concentration, and optionally also for zinc concentration, in the rejuvenated autodeposition bath and to continue operation (III) as described immediately above until the iron concentration no longer exceeds its target maximum value, and if a target maximum value for zinc was also chosen, the zinc concentration also no longer exceeds its target maximum value.

In most instances, in order to avoid unnecessary dilution of the rejuvenated autodeposition bath, it is preferred that the known volume of said aqueous based liquid provided together with the IEX resin in operation (II) as described above be not greater than the volume of said liquid required to fill a container in which said cation-exchange resin is already packed as closely and levelly as is practically possible without mechanical compression and the filling of the container with liquid is to the same level in the container as the level of the cation-exchange resin also present in the container.

It has been found that zinc cations in an autodeposition bath are more strongly bound to a strong acid type cation-exchange resin than either iron or sodium ions. However, zinc ions in used autodeposition baths have also been found to be slower than either sodium or iron ions to form their bonds to the strong acid type cation-exchange resin (probably primarily because the maximum concentration of zinc ions that can be tolerated without irreversible damage to the autodeposition bath is smaller than the usual concentrations of iron and sodium ions). Nevertheless, it is possible to remove a practically useful amount of zinc ions along with iron ions in a process as described above for maximizing the amount of iron removed, without removing a large enough fraction of the sodium ions to result in irreversible destabilization of the autodeposition bath. Accordingly, if it is desired to remove both iron and zinc cations from the used autodeposition bath in substantial quantities, a process as described above for maximizing the removal of iron will often be satisfactory.

If it is desired to maximize the removal of zinc and minimize the removal of both iron and sodium, the used autodeposition bath preferably is passed through the known volume of ion-exchange at the same preferred rates as are specified above for maximizing the removal of iron, but instead of discontinuing the flow soon after transfer of iron from the used autodeposition bath to the cation-exchange resin has occurred, many bed volumes of bath are passed through the IEX column, in what is called a "thermodynamic" mode of operation, to first bind the sites of the resin to iron and sodium cations and then gradually displace most of the thus bound iron and sodium cations by zinc cations. In order to avoid clogging the IEX column, it is preferable to periodically reverse the direction of flow of bath through the column a number of times when running this large volume of autodeposition bath through the IEX column.

It has been observed that when autodeposition baths are pumped through beds of cation-exchange resin at the preferred higher flow rates indicated above, the pressure drop across the bed of cation-exchange resin (i.e., the difference in pressure between the used autodeposition bath flowing into the bed and the iron-cation-content reduced used autodeposition bath flowing out of the bed) that is required to continue liquid flowing at the same rate slowly increases with continued flow time. There appear to be at least two plausible theoretical explanations for this effect: Some of the particles of cation-exchange resin may be fragmented by mechanical action and/or sufficiently displaced from their original positions in the cation-exchange resin bed to produce a cation-exchange resin bed with a smaller free volume fraction and therefore a smaller effective average diameter for its channels in the bed through which liquids can flow; and/or enough sodium ions can be temporarily bound to the cation-exchange resin, even at relatively high flow rates through it, to permit temporary aggregation of some of the originally distinct emulsified particles of coating resin, thereby increasing the effective viscosity of the autodeposition bath. Whether either of these or some as yet unappreciated phenomenon is the actual cause of the requirement for increased pressure drop to maintain the same flow rate, it has been found that the increased pressure requirement can be at least largely reversed, and the danger of destabilization of the autodeposition bath greatly reduced, by occasional back-flushing of the packed cation-exchange resin bed used.

Accordingly, in one preferred embodiment of the invention, the pressure drop across the cation-exchange resin bed is monitored, intermittently or more preferably continuously, as used autodeposition bath flows through the bed in a primary direction (usually "down") at a selected flow rate, and whenever the pressure drop increases over the value initially required to maintain the same flow rate by as much as, with increasing preference in the order given, 5, 3, 2.0, 1.70, 1.30, 1.20, 1.10, 1.00, 0.95, 0.90, 0.87, or 0.84 bar(s) per meter of cation-exchange resin bed length in the primary direction of flow, the direction of flow of the used autodeposition bath through the cation-exchange resin bed is reversed for an interval of time. Preferably, this interval of time during which the flow is reversed is long enough that, when flow of the used autodeposition bath through the cation-exchange resin bed is returned to the primary direction, the pressure drop across the cation-exchange resin bed required to maintain the initially selected flow rate will not exceed the pressure drop initially required with the same bed of cation-exchange resin when it was freshly prepared for its first contact with used autodeposition bath by more than, with increasing preference in the order given, 0.40, 0.20, 0.16, 0.14, 0.12, 0.10, or 0.08 bar/meter of cation-exchange resin bed length in the primary direction of flow.

After sufficient experience has been gained with a particular dimension of cation-exchange resin bed of a particular chemical type and with used autodeposition baths from an autodeposition process that produces used baths with reasonably constant compositions, the times between and for backflow intervals can be, and for simplicity and economy preferably are, determined simply by the number of bed volumes passed in each direction, without any need to measure the pressure drop values in order to assure that they will fall within a preferred range. When sufficient information is available to practice this method, it is most highly preferred.

One of two general variations of back-flushing operations in processes according to this invention have been found generally to be most practical so far. When iron is substantially the only type of multivalent cations present in the used autodeposition bath, the most preferred capacity and selectivity for iron over sodium are normally reached after about 10 - 30 bed volumes of used autodeposition bath have been passed through the bed of cation-exchange resin. Normally, no back-flushing is needed before this time to remain within the bed pressure drop preferences already described above. In this type of operation therefore, rinsing and acid regeneration of the cation-exchange resin bed are generally performed without being preceded by any back-flushing with used autodeposition bath at all. Under these conditions, it is usually preferred to cause at least part of the first rinse liquid, the acidic regenerant liquid, or a second rinse liquid used after the acidic regenerant liquid, most preferably only the latter, to flow through the container in the reverse of the primary direction of flow of used autodeposition bath through the same volume of cation-exchange resin. (When, as is most common, the primary direction is down and the force of gravity rather than any mechanical restrainer at the top of the ion-exchange resin bed is relied on to keep the ion-exchange resin bed within its container, the flow rate during backflush normally must be substantially less than the rate of flow in the primary direction, so that the resin beads form a "fluidized bed" that remains within the intended ion-exchange resin bed container rather than being vigorously propelled toward the top of the ion-exchange resin bed container and possibly escaping therefrom. More particularly, the backflush flow rate preferably is not greater than, with increasing preference in the order given, 25, 20, 15, 12, 10, 9.0, 8.0, or 7.5 BV/hr per meter of column length when back-flushing is at normal ambient human comfort temperature, i.e., 18 - 23°C, but may be considerably higher if the backflush is at a higher temperature.)

If zinc is a substantial constituent of the autodeposition bath being treated and it is desired to remove zinc selectively over iron, as may often be desired because the tolerance of preferred autodeposition baths for zinc is lower than that for iron, it is preferred to pass at least, with increasing preference in the order given, 100, 150, 200, 250, 275, or 290 bed volumes of used autodeposition bath through a cation-exchange resin bed before regenerating the cation-exchange resin, because the maximum capacity and selectivity for zinc are obtained under such conditions. However, not more than, with increasing preference in the order given, 90, 85, 80, 75, 70, 65, 60, 55, or 50 BV's of used autodeposition bath preferably should be passed through the bed of cation-exchange resin before it is back-flushed by reversing the flow as described above. During reversed flow, the flow rate preferably is sufficiently high that the volume of cation-exchange resin used expands to fill a total volume that exceeds its bed volume by at least, with increasing preference in the order given, 10, 15, 17, 19, 21, 23, 25, 27, or 29 % of the bed volume, so as to fill most or all of the total column volume with fluidized resin but not so high a flow as to create a nonfluidized portion of bed at the top of the column. The exact percentage of fluid expansion depends on how full the column is originally packed. For operation in which zinc removal is the predominant goal, the column is usually packed to 75 % full so that the theoretical expansion is 33 %, with a practical working limit of ~29%. The flow rate needed for this purpose depends on the temperature of the used autodeposition bath (or other liquid) used in back-flushing and is taught in literature available from the manufacturers of cation-exchange resins. For example, with AMBERLITE® IR-120 Plus cation-exchange resin, according to its manufacturer's literature, a flow rate of 163 liters per minute per square meter of cross section of the cation-exchange resin bed expands the bed by about 24 % at 27 ºC and by only about 4 % at 60 ºC. If the bed expansion is from 20 - 30 % during back-flushing, about 5 bed volumes of reverse flow of the used autodeposition bath normally are sufficient to bring the bed pressure drop back to a preferred range, as indicated above, when the flow of used autodeposition bath through the container for the cation-exchange resin is resumed in the primary direction. Contrary to the situation where predominant removal of iron is desired and the back-flushing usually is done as part of regeneration, as already noted above, when the back-flushing is done with used autodeposition bath, its flow rate during back-flushing should be about the same as during flow in the primary direction, and when the cation-exchange resin has reached its target loading with zinc and/or iron, with back-flushing having already been accomplished with used autodeposition bath, the cation-exchange resin is normally preferably rinsed and regenerated with acidic regenerant liquid flowing the same direction as the primary direction for the flow of used used autodeposition bath.

Back-flushing as described above, followed by flow once again in the primary direction, preferably is repeated as often as needed until the volume of cation-exchange resin used has been loaded to a selected target fraction of its saturation capacity.

It has been found that contacting used autodeposition bath with a SAC IEX resin for a limited time as described above, combined with regeneration of the cation-exchange resin in the bed to its acid form and suitable rinses between the contacts with autodeposition baths and those with regenerant acids, allows very long extended use of the same cation-exchange resin bed.

Although a process according to this invention has been described above in its simplest, and therefore, for reasons of economy, generally most preferred form, using a substantially constant rate of liquid flow, it will be apparent to those skilled in the art that flow could be interrupted, pulsed, or otherwise caused to vary with time instead of continuing at a steady rate, and other variations could be made, without departing from the spirit and scope of the invention. For example, but without limitation, a process operation according to the invention may be iterated, as has already been described above in one instance. This may be particularly desirable if a fixed volume of autodeposition bath to be rejuvenated is not much larger than the fixed volume of SAC IEX resin to be used in the process.

In order to minimize the costs of the removal of iron and/or zinc from used autodeposition baths according to the invention, it is preferable, before regenerating the known volume of cation-exchange resin used, to transfer from the used autodeposition bath to this cation-exchange resin at least, with increasing preference in the order given, 25, 35, 45, 55, 65, 75, or 85 % of the "feed-specific dynamic capacity" of the known volume of the cation-exchange resin used for at least one of iron and zinc. This feed-specific dynamic capacity of the cation-exchange resin is often quite different from the capacity of the resin for the same type of cation as defined by ion-exchange from simple salt solutions in water, presumably because of complex ion formation in an autodeposition bath. The feed-specific dynamic capacity for iron of the known volume of cation-exchange resin is defined by a test procedure comprising the following operations:
(I') providing a plurality of incremental test volumes of a test liquid having the same chemical composition as the used autodeposition bath provided in operation (I) in a process for rejuvenating used autodeposition bath as described above, each of said test volumes being not more than the volume of the cation-exchange resin provided in operation (II) in a process for rejuvenating used autodeposition bath as described above;
(II') causing at least a first and a second one of said incremental test volumes to flow in succession one after another at a rate of at least 40 BV/hr through a test container that:
   - has the same size and shape as the container provided in operation (II) in a process for rejuvenating used autodeposition bath as described above and also has sets of first and second liquid-permeable openings that have the same size, shape, and positions in the test container as have the sets of first and second liquid-permeable openings in the container provided in operation (II) in a process for rejuvenating used autodeposition bath as described above; and
   - contains a volume of the same kind of cation-exchange resin as was provided in operation (II) in a process for rejuvenating used autodeposition bath as described above, said volume being the same as, and having the same shape and position within said test container as, the volume of cation-exchange resin that was provided in operation (II) in a process for rejuvenating used autodeposition bath as described above;
(III') during and after the flow of each incremental test volume and before beginning the flow of the next incremental test volume into said test container, collecting any effluent test increment that flows out from said test container;
(IV') determining the mass of iron present in each such effluent test increment;
(V') calculating as the first "incremental iron decrement" (and also as the first "cumulated iron decrement") the difference between the mass of iron in the first incremental test volume and the mass of iron in the effluent test increment that flows out of the test container after the first incremental test volume is caused to flow into said test container and before the second incremental test volume is caused to flow into said test container;
(VI') calculating as the second "incremental iron decrement" the difference between the mass of iron in the second incremental test volume and the mass of iron in the effluent test increment that flows out of the test container after the second incremental test volume is caused to flow into said test container and before any subsequent incremental test volume is caused to flow into said test container;
(VII') calculating and designating as the second "cumulative iron decrement" the sum of said first and said second incremental iron decrements;
(VIII') unless said second cumulative iron decrement is less than 1.0 % of said first incremental iron decrement, continuing to determine in like manner at least a third and if needed further successive incremental and cumulative iron decrements until calculating an n'th incremental iron decrement that is smaller than 1.0 % of the (*n*-1)'th cumulative iron decrement, and defining the (n-1)'th cumulative iron decrement as said feed-specific dynamic capacity for iron; if said second cumulative iron decrement is smaller than 1.0 % of said first incremental iron decrement, defining said first incremental iron decrement as said feed-specific dynamic capacity for iron.
As will presumably be obvious to those skilled in the art, the "test container" required in the above-specified process for determining the feed-specific dynamic capacity may be and usually most preferably is the same as the container used for transferring iron from the used autodeposition bath to the cation-exchange resin in a process according to this invention.

The "feed-specific dynamic capacity for zinc" is defined by a test procedure that is the same as that for determining the feed-specific dynamic capacity for iron as defined above, except that (i) the word "zinc" is substituted for the word "iron" wherever the latter occurs and (ii) the incremental test volumes may be as large as 30 times the volume of the cation-exchange resin.

When the ion-exchange resin used in a process according to this invention has been loaded to a selected target value for at least one of iron and zinc, the ion-exchange resin is ready for regeneration. When compositions and other operating parameters have been sufficiently reliably established by experience with particular autodeposition compositions and loads of substrate surfaces to be coated, and the ion-exchange resin is used in a bed as described above, the timing of regeneration of the cation-exchange resin can be based on the number of bed volumes of used autodeposition composition passed through the bed, without needing any explicit measurement of the degree of loading of the cation-exchange resin.

Contrary to the situation with iminodiacetate or other weak acid resins, in a process according to this invention regeneration of the cation-exchange resin to its acid form is preferably accomplished with a strong and reasonably concentrated acid. The two least expensive such acids in most of the U. S. are sulfuric and hydrochloric acids, and between these two, hydrochloric acid is usually preferred in a process according to this invention even if it is slightly more expensive, because it avoids the danger of possibly irreversible plugging of the cation-exchange resin bed with sparingly soluble alkaline earth metal sulfates when alkaline earth metal cations, the defining constituents of "hard" water, are accidentally introduced into any of the liquids that are passed through the cation-exchange resin bed. However, if such contaminants in molar concentrations that exceed the molar solubility limits of their sulfates can be strictly excluded from the cation-exchange resin bed, sulfuric acid regeneration is equally effective and may be slightly less expensive. Other strong mineral acids such as nitric, hydrobromic, perchloric acids, and the like or strong organic acids such as trichloroacetic are technically satisfactory (unless so strongly oxidizing as to damage the cation-exchange resin or susceptible to forming precipitates with some constituent of the used autodeposition bath) but generally are much more expensive and have no compensating benefits.

The concentration of regenerating acid has not been found to be nearly so important to obtaining a high efficiency during regeneration as it is in the currently commercial process using iminodiacetate resins. For other reasons, however, when hydrochloric acid is used as the regenerant, its concentration preferably is at least, with increasing preference in the order given, 2.0, 4.0, 6.0, 8.0, 9.0, or 9.8 % and independently preferably is not more than, with increasing preference in the order given, 35, 30, 25, 20, 15, 12, or 10.2 %. These preferences are primarily for reasons of economy and/or environmental protection: If the concentration is too low, a large volume of pumping that could be avoided with more concentrated acid regenerant is required and more water is wasted if the acid is discharged to the environment without recycling, while if the concentration is too high, there is a considerable odor nuisance and corrosion potential in the atmosphere in the vicinity of any open containers of the acid, more expensive container materials may be required to resist corrosion adequately, and the minimum volumes required to obtain the desired degree of regeneration may be difficult to control accurately enough in practice.

In accordance with and in supplementation of these preferences, regeneration and reuse of the cation-exchange resin when practiced in a process according to this invention preferably comprises, more preferably consists essentially of, or still more preferably consists of, the following operations:
(R1) providing: (i) a known volume of solid SAC IEX resin having a known capacity for hydrogen cations and having at least one of zinc cations and iron cations bound to the cation-exchange resin but capable of exchanging with other cations, said known volume of solid SAC IEX resin optionally being provided together with and in contact with a known volume of an aqueous based liquid that prevents the IEX resin from drying as described above; and (ii) a regeneration container in which said known volume of cation-exchange resin and any liquid provided with and in contact with it are confined, said regeneration container having a set, which may have a single member or a plurality of members, of third liquid permeable openings therein, and a distinct set, which may have a single member or a plurality of members, of fourth liquid permeable openings therein, said sets of third and of fourth liquid permeable openings being mutually exclusive sets, so that a flow of liquid at a constant rate into the regeneration container successively through said set of third liquid-permeable openings, into contact with said volume of said cation-exchange resin confined within the regeneration container, and out from the regeneration container through said set of fourth liquid-permeable openings can be maintained by means for causing a flow of liquid, without thereby displacing the solid cation-exchange resin from said regeneration container;
(R2) selecting a first coating resin concentration maximum, a first iron cation concentration maximum, and a first zinc cation concentration maximum;
(R3) causing:
   (1) a first rinse liquid, in which each of the concentrations of coating resin, iron cations, and zinc cations, independently for each, is not more than, with increasing preference in the order given, 50, 25, 12, 8, 6, 4, 2, 1.0, 0.5, 0.2, 0.05, or 0.02 % of the target coating resin, iron cations, or zinc cations concentration maximum respectively, to flow successively into said regeneration container through the set of third liquid-permeable openings and then into contact with said volume of cation-exchange resin confined within said regeneration container; and
   (2) a modified first rinse liquid, which is spontaneously generated by contact of the inflowing first rinse liquid with the cation-exchange resin and by mixture of the inflowing first rinse liquid with any other liquid present in the regeneration container when the first rinse liquid begins to flow into the regeneration container, to flow out of the regeneration container and away from contact with the cation-exchange resin through the set of fourth liquid-permeable openings at a flow rate that is substantially the same as the flow rate at which first rinse liquid flows into the container as recited in part (1) of this operation;
(R4) continuing the flows caused in operation (R3) until each of the concentrations of coating resin, iron cations, and zinc cations in the modified first rinse liquid flowing out of the container does not exceed its respective target concentration maximum;
(R5) selecting a target minimum hydrogen ion content for regenerated SAC IEX resin, said target minimum hydrogen ion content not being as large as said known hydrogen ion capacity, and, if the volume of cation-exchange resin confined in said regeneration container at the end of operation (R4) does not have a hydrogen cation content that is at least as great as said target minimum hydrogen ion content, causing:
   (1) an acidic regenerant liquid to flow at a known rate successively into said container through a set, which may have a single member, of fifth liquid-permeable openings in said regeneration container and then into contact with said cation-exchange resin; and
   (2) a modified acidic regenerant liquid, which is spontaneously generated by contact of the inflowing acid regenerant liquid with the cation-exchange resin and mixture of the inflowing acidic rinse liquid with any other liquid present in the regeneration container when the acidic regenerant liquid begins to flow into the regeneration container, to flow out of the regeneration container and away from contact with the cation-exchange resin through a set, which may have only a single member, of sixth liquid permeable openings, said fifth and sixth sets of liquid permeable openings being mutually exclusive sets; and
(R6) continuing the flow caused in operation (R5) until the volume of cation-exchange resin has a hydrogen cation content that is at least as great as the mathematical product of the known hydrogen cation capacity of the resin multiplied by the target hydrogen cation capacity fraction.

Often, the regeneration container will be the same as the container used during rejuvenation of the used autodeposition bath as already described above, and if it is, independently for each preference stated:
- said set of third liquid permeable openings is the same as the set of first liquid permeable openings utilized during rejuvenation of the used autodeposition bath;
- said set of fourth liquid permeable openings is the same as the set of second liquid permeable openings utilized during rejuvenation of the autodeposition bath; and
- either:
   -- said set of fifth liquid permeable openings is the same as the set of first liquid permeable openings utilized during rejuvenation of the used autodeposition bath and said set of sixth liquid permeable openings is the same as the set of second liquid permeable openings utilized during rejuvenation of the autodeposition bath; or
   -- said set of fifth liquid permeable openings is the same as the set of second liquid permeable openings utilized during rejuvenation of the used autodeposition bath and said set of sixth liquid permeable openings and is the same as the set of first liquid permeable openings utilized during rejuvenation of the autodeposition bath.

In other words, when the same container is used for both rejuvenation and regeneration, the first rinsing, which normally utilizes a purified water rinse liquid, preferably is achieved by causing the first rinse liquid to flow in the same direction through the container as the used autodeposition bath flowed during rejuvenation, but the actual regenerant acid can flow through the container either in the same direction as during rejuvenation or in the reverse direction. (The former is usually preferred for convenience, unless no subsequent rinsing after regeneration is planned.)

If the regeneration container and the cation-exchange resin confined therein are the same as the container and cation-exchange resin used for rejuvenation, then, unless:
- the acidic liquid used during regeneration as described above is the same acid or mixture of acids that is present in any used autodeposition bath expected later to be rejuvenated by contact with the regenerated cation-exchange resin;
- the concentration of this acid or mixture of acids in the used autodeposition bath is lower than the concentration desired in the thus-rejuvenated autodeposition bath; and
- the amount of residual acid or mixture of acids present in the regeneration container at the end of operation (R6) as described above is an amount that will raise the concentration of acid in the used autodeposition bath to be subsequently rejuvenated to the value preferred in the rejuvenated autodeposition bath,
a rinsing and regeneration process according to the invention preferably also includes additional operations as follows:
(R7) selecting a second maximum acid concentration value, a second coating resin concentration maximum, a second iron cation concentration maximum, and a second zinc cation concentration maximum, each of which second concentration maxima may be the same as or different from the corresponding first concentration maximum; and
(R8) after completing operation (R6) as described above, causing:
   (1) a second rinse liquid, in which each of the concentrations of coating resin, iron cations, and zinc cations, independently for each, is not more than, with increasing preference in the order given, 50, 25, 12, 8, 6, 4, 2, 1.0, 0.5, 0.2, 0.05, or 0.02 % of the target second coating resin, iron cations, or zinc cations concentration maximum respectively, to flow successively into said regeneration container through a set of seventh liquid permeable openings and then into contact with said volume of cation-exchange resin confined within said regeneration container; and
   (2) a modified second rinse liquid, which is spontaneously generated by contact of the inflowing second rinse liquid with the cation-exchange resin and by mixture of the inflowing second rinse liquid with any other liquid present in the regeneration container when the second rinse liquid begins to flow into the regeneration container, to flow out of the regeneration container and away from contact with the cation-exchange resin through a set of eighth liquid permeable openings in the regeneration container, said eighth set and said seventh set being mutually exclusive sets, at a flow rate that is substantially the same as the flow rate at which second rinse liquid flows into the container as recited in part (1) of this operation; and
(R9) continuing the flow caused in operation (R8) until each of the concentrations of coating resin, iron cations, and zinc cations in the modified second rinse liquid flowing out of the container does not exceed its respective second concentration maximum.

When the regeneration container is the same as the container used during rejuvenation and there has not been any back-flushing during previous rejuvenation and/or regeneration operations that occurred after the cation-exchange resin confined within the container was last previously backflushed, said seventh set of liquid permeable openings in the regeneration container preferably is, during at least part of operations (R8) and (R9), the same as the second set of liquid permeable openings used during rejuvenation, and when said seventh set is the same as said second set, said eighth set preferably is the same as said first set used in rejuvenation, so that the flow will be back-flushing as compared to the flow direction during the rejuvenation stage.

Irrespective of when during rejuvenation, rinsing, and/or regeneration, backward flow occurs, the total volume of flow in the backward direction compared to other liquid flows during these same processes preferably is at least, with increasing preference in the order given, 0.04, 0.06, 0.08, 0.10, 0.12, 0.14, 0.16, 0.18, 0.20, 0.22, 0.24, 0.26, or 0.28 percent of the total volume of flow in both directions through the container and the volume of cation-exchange resin confined therein.

The relatively high rates of flow through the cation-exchange resin that are required for used autodeposition bath in a process according to the invention have no particular value for either rinse liquids or regenerant acid liquids, and in order to conserve pumping energy and minimize the volumes of rinse and regenerant liquids needed, the flow rates during any operation of regeneration preferably is limited in the same manner as already specified above for back-flushing rates.

Ordinarily, deionized (hereinafter usually abbreviated as "DI") water is preferred for both first and second rinse liquids, but under special circumstances as discussed below, other rinse liquids may be preferred. The preferred acidic regenerant liquid has already been described above.

The multivalent cation extraction, back-flushing, regeneration, and rinsing stages as described above can be combined and/or repeated as needed to handle any finite volume of used autodeposition bath with any finite volume of cation-exchange resin. Normally, primarily for economy of operation, it is preferred to allow at least one of iron cations concentration and zinc cations concentration in the used autodeposition bath to increase, compared with concentration of the same cations in the initial, unused autodeposition bath, by an increment that is at least, with increasing preference in the order given, 0.1, 0.2, 0.4, 0.6, 0.8, 1.0, 1.2, or 1.4 g/I for iron and is at least, with increasing preference in the order given, 0.01, 0.02, 0.04, 0.06, 0.08, 0.10, 0.15, or 0.20 g/l for zinc, provided that the increment in concentration of iron cations, zinc cations, or both is not sufficiently large to cause any visually detectable precipitation of coating resin solids before completion of the process, before beginning the contact of the used autodeposition bath with any cation-exchange resin. Often this is efficiently achieved by maintaining the autodeposition bath in continuous flow, from a tank or similar reservoir into a separate container where metal surface to be coated is contacted with it, out of this coating container into a distinct container where it interacts with a volume of cation-exchange resin confined within the distinct container as described above, then back to the reservoir. In such apparatus, alternative flow paths are preferably also provided, so that one of the coating container and the container for the cation-exchange resin can be bypassed for a time interval if desired while continuous flow is maintained between the reservoir and whichever of the coating container and the container for the cation-exchange resin is not being bypassed.

If there is a sufficient volume of both autodeposition bath and cation-exchange resin in this type of operation, a single volume of cation-exchange resin confined within a single container will allow indefinitely prolonged operation of a single initial volume of autodeposition bath without replacement (although the consumed ingredients from the autodeposition bath will naturally have to be replenished), because the volume of cation-exchange resin can be regenerated during a time interval when the autodeposition bath is not passing through it, and the build up of multivalent metal cations during this time interval will not be enough to destabilize the autodeposition bath. By providing at least one alternative volume of cation-exchange resin confined within an alternative container and suitable conduits and valves to allow the flow of used autodeposition bath to bypass any particular volume of cation-exchange resin that is being regenerated while still passing through an alternative volume that is not being regenerated at the same time, continuous operation of the autodeposition coating process can be maintained for an indefinitely prolonged period of time, even if the volume of autodeposition bath and/or each of the at least two distinct volumes of cation-exchange resin is relatively small.

Any type of autodeposition bath may be rejuvenated by a process as described above. However, the process has been found to be particularly advantageous with and therefore is preferably applied to a used autodeposition bath that comprises, preferably consists essentially of, or still more preferably consists of, water and the following ingredients, these preferences being independent for each ingredient stated:
(A) from 5 to 550, more preferably from 30 to 300, still more preferably from 40 to 120, and most preferably from 40 to 80, g/l, measured as ultimate solids content from coating resin, of an organic coating resin that is substantially water-insoluble but is dispersed in the used autodeposition bath with a sufficient amount of anionic dispersing agent that the dispersion is stable in the absence of a concentration of at least, with increasing preference in the order given, 0.1, 0.3, 0.5, 0.8, 1.2, 1.6, 1.8, 2.0, 2.2, 2.4, 2.6, 2.8, 3.0, or 3.2 g/l of a total of dissolved multivalent cations in the used autodeposition bath, provided that not more than, with increasing preference in the order given, 0.05, 0.10, 0.15, 0.20, or 0.25 g/l of said total dissolved multivalent cations is from zinc;
(B) from about 0.4 to about 5, more preferably from 0.5 to 4.0, still more preferably from 1.0 to 3.0, g/l of fluoride ions;
(C) an amount sufficient to provide from about 0.010 to about 0.20, more preferably from 0.011 to 0.09, still more preferably from 0.012 to 0.045, oxidizing equivalents per liter of an oxidizing agent selected from the group consisting of dichromate, hydrogen peroxide, ferric ions, and mixtures thereof;
(D) a source of hydrogen cations in an amount sufficient to impart to the autodeposition composition a pH value that is not more than, with increasing preference in the order given, 6.5, 5.5, 5.0, 4.5, 4.0, 3.8, 3.6, 3.4, 3.2, 3.0, 2.8, or 2.6 and independently preferably is at least, with increasing preference in the order given, 0.5, 1.0, 1.2, 1.4, 1.6, or 1.8; and
(E) a concentration of iron cations that is at least, with increasing preference in the order given, 0.1, 0.2, 0.4, 0.6, 0.8, 1.0, 1.5, 1.8, 2.0, 2.2, 2.4, 2.6, 2.8, or 3.0 g/l, and, optionally, up to 0.25 g/l of zinc cations, provided that the concentration of the total of iron cations and zinc cations is not sufficiently large to cause any visually detectable precipitation of coating resin solids from the autodeposition bath before completion of the process.

The preference for a fairly high concentration of iron cations in a used autodeposition bath to be treated according to this invention arises primarily from the economic benefit of minimizing the number of times that a particular volume of autodeposition bath must pass through a particular cation-exchange resin volume in order to return its iron content to the normal optimum working level of 1.0 to 1.5 g/I of iron(III) cations established in the most preferred type of freshly made autodeposition bath. It has been found that 3.0 g/I of iron can be tolerated by most working autodeposition baths without substantial loss of quality of the autodeposited coating or substantial danger of irreversible increases in the viscosity of the bath or coagulation of the bath. A used bath with a relatively high concentration of iron(III) cations will maximize the ratio between iron and sodium transferred to the ion-exchange resin. However, if a particular bath of unusual composition should prove to be unstable at 3.0 g/l of iron, the iron concentration preference for that bath would naturally be lowered to avoid bath instability. The other preferences are simply those for preferred working autodeposition baths, because the concentrations of constituents of these baths other than multivalent cations and hydrogen cations is not normally changed by subjecting a used autodeposition bath to a process according to this invention for reducing its concentration of multivalent ions.

It is normally also preferred that any autodeposition bath to be used for coating ferriferous and/or zinciferous surfaces contain a total of no more than, with increasing preference in the order given, 2.0, 1.5, 1.0, 0.80, 0.60, 0.3, 0.1, 0.07, 0.05, 0.03, or 0.01 g/l of anions other than: fluoride anions in any amount; surfactant anions in any amount; chloride anions not in excess of 0.9 g/I; and phosphate anions not in excess of 0.05 g/l. Expressed in another way, the total content of fluoride and surfactant anions, any amount of chloride up to 0.9 g/l, and any amount of phosphate up to 0.05 g/I should be deducted from the actual total content of anions before determining whether the thus modified total content of anions meets this preference.

As with other uses of ion-exchange resins, it is generally preferred with this invention to use the ion-exchange resins in the form of a bed formed by settling of the beads or particles of solid resin as supplied by the manufacturer, after conversion to acid form if not so supplied, into a container with sidewalls impervious to liquids but a bottom at least partially pervious to liquids.

The rinses and eluates from various stages of a process according to this invention may advantageously be at least partially recycled for use in a manner known *per se,* and in some instances it may be possible to eliminate some of the intermediate rinses by control of the concentrations of regenerants and other liquid compositions used, for example, so that the amount of acid remaining in equilibrium with the ion-exchange resin after regenerating the resin corresponds sufficiently closely to the amount needed to replenish the autodeposition bath.

The conditions and compositions used for coating metal substrates by autodeposition in a process according to this invention are generally those already known in the art. Specific preferred conditions are described below.

It is highly preferred for the coating resin present in an autodeposition bath to be used in a process according to this invention to be dispersed exclusively with the aid of an "internal" dispersing agent, which consists of sodium sulfoethyl acrylate or a similar monomer copolymerized into the polymer that constitutes the bulk of the coating resin solids in the baths.

One especially preferred type of coating resin for use in forming autodeposited coatings in a process according to the present invention comprises internally stabilized vinylidene chloride copolymers or externally stabilized vinylidene chloride copolymers containing in excess of 50 %, or more preferably at least 80 %, of residues from polymerizing vinylidene chloride. Most preferably, the vinylidene chloride copolymer is crystalline in nature. Exemplary crystalline resins are described in U.S. Patents 3,922,451 and 3,617,368.

A preferred working autodepositing bath containing a commercially available poly{vinylidene chloride} resin has the following composition, designated Bath composition I:

| Ingredient | Amount (in Parts, 100 % Active Ingredients Basis) |
|---|---|
| Vinylidene chloride-acrylonitrile-butyl acrylate copolymer latex | 50.00 |
| Dodecyl diphenyloxide disulfonate surfactant | 0.14 |
| Colloidal carbon black pigment | 1.88 |
| Ferric fluoride | 3.00 |
| Hydrofluoric acid | 1.40 |
| Deionized water | balance to make one liter of bath. |

Examples of latexes for suitable use in this composition are commercially available and include the SERFENE® latexes available from Morton Chemical, DARAN® 112 and DARAN® SL 143 latexes available from Dow Chemical Co., 76 RES 5517 available from Unocal and the HALOFLEX® latexes such as, for example, HALOFLEX® 202 available from Imperial Chemicals Industries. Examples of colloidal carbon black pigment dispersions suitable for use in the composition include RAVEN BLACK® 1035 available from Columbian Chemicals Co., T-2166A available from ABCO Enterprises, Inc., AQUABLACK® 255 and AQUABLACK® 115A available from Borden Chemical Co.

Another embodiment of this invention is a process combining rejuvenation of used autodeposition bath as described above with reuse of the rejuvenated autodeposition bath. Such a process adds to operations (I) - (III) of a rejuvenation process as described above another operation of contacting the rejuvenated autodeposition bath from the end of operation (III), optionally after mixing it with an additional amount of newly prepared or used autodeposition bath that has not been rejuvenated, with additional substrate surface, so as to form on the additional substrate surface an autodeposited coating that is smooth, not textured or grainy, after drying.

The practice of the invention may be further appreciated from the following working and comparison examples.

### Examples Group 1

The processes in this group were performed on a laboratory scale, utilizing a known volume of 140 ml of AMBERJET™ 1200H cation-exchange resin (which is supplied in its acid form), previously rinsed with deionized water. The cation-exchange resin was arranged as a bed in the bottom of a conventional ion-exchange column. The bed had a diameter of about 2.5 centimeters and a height in the direction of flow through the bed of about 30 centimeters. The cation-exchange resin bed when settled occupied 75 % of the total volume of the column through which the cation-exchange resin could move, allowing a maximum of volume expansion of the settled bed by about one third during back-flushing. A volume of 28 liters of used autodeposition bath from an AUTOPHORETIC® 866 Coating Process (materials and directions for their use commercially available from Henkel Surface Technologies Division of Henkel Corporation, Madison Heights, Michigan) was supplied for rejuvenation. This used autodeposition bath contained 1.31 g/l of dissolved iron cations and 0.18 g/I of dissolved sodium cations.

The known volume of used autodeposition bath was divided into incremental volumes of various sizes and pumped through the prepared cation-exchange resin bed at a rate indicated in Table 1. Effluent samples were collected after each incremental volume and analyzed for their iron and sodium contents. Other conditions and results are shown in Table 1 below. The following abbreviations not previously defined are used in Table 1: "DIW" means "deionized water"; "10 % HCl" means "a solution of HCl in water that contains 10 % of HCl"; and "B" means "in the backflush direction" (i.e., upward through the column rather than downward, as in all of the other entries in the Table).

The concentrations of iron measured in the effluents that followed the fifth and sixth incremental volumes of used autodeposition bath fed to the cation-exchange resin bed demonstrate that the feed-specific dynamic capacity for iron of this cation-exchange resin bed is slightly more than 30 grams of iron per liter of cation-exchange resin. (if the aim of this test had been only to determine this value, or to exchange iron only, the additions of used autodeposition bath would have been at least temporarily terminated at this point, and the remainder of the operations begun. However, in this particular test, it was desired also to determine at least approximately how much sodium could be removed without irreversibly destabilizing the used autodeposition bath, and how much iron could be removed from the total used autodeposition bath, without intermediate rinsing and regeneration of the resin.)

**Table 1**

| **LOADING STAGE** | | | | | | | | |
|---|---|---|---|---|---|---|---|---|
| **Incremental Volume of Used Autodeposition Bath or Other Type of Feed to Cation-Exchange Resin** | | | **Concentration, g/l, in Corresponding Effluent of:** | | **Grams, Per Liter of Cation-Exchange Resin, Transferred from Feed to Cation-Exchange Resin of:** | | **% of Total in Feed Transferred from Feed to Cation-Exchange Resin for:** | |
| **Order of Use** | **Size in Bed Volumes** | **Flow Rate, BV/Hour** | **Iron** | **Sodium** | **Iron** | **Sodium** | **Iron** | **Sodium** |
| 1 | 5 | 40.7 | < 0.02 | 0.026 | 6.5 | 0.75 | > 98 | 85 |
| 2 | 5 | 40.7 | < 0.02 | 0.028 | 12.9 | 1.49 | > 98 | 85 |
| 3 | 5 | 40.7 | < 0.02 | 0.028 | 19.4 | 2.23 | > 98 | 84 |
| 4 | 7 | 40.7 | 0.17 | 0.044 | 27.3 | 3.15 | 95 | 81 |
| 5 | 10 | 40.7 | 1.01 | 0.032 | 30.4 | 4.6 | 72 | 82 |
| 6 | 10 | 40.7 | 1.35 | 0.030 | 30.0 | 6.0 | 55 | 82 |
| 7 | 20 | 40.7 | 1.37 | 0.046 | 28.9 | 8.6 | 36 | 79 |
| 8 | 20 | 40.7 | 1.40 | 0.129 | 27.0 | 9.6 | 25 | 66 |
| 9 | 20 | 40.7 | 1.45 | 0.126 | 24.3 | 10.6 | 18 | 59 |
| 10 | 20 | 40.7 | 1.41 | 0.118 | 22.3 | 11.8 | 14 | 55 |
| 11 | 20 | 40.7 | 1.32 | 0.150 | 22.2 | 12.3 | 12 | 49 |
| 12 | 30 | 40.7 | 1.37 | 0.166 | 20.4 | 12.6 | 9.1 | 42 |
| 13 | 28 | 40.7 | 1.37 | 0.146 | 18.7 | 13.4 | 7.1 | 38 |

| **FIRST RINSE STAGE** | | | | | | | | |
|---|---|---|---|---|---|---|---|---|
| DIW | 2.2 | 7.3 | 0.96 | 0.122 | Not applicable | | | |
| DIW | 2.2 | 7.3 | 0.27 | 0.078 | | | | |

| **RESIN REGENERATION STAGE** | | | | | | | | |
|---|---|---|---|---|---|---|---|---|
| 10 % HCl | 2.0 | 7.3 | 8.18 | 5.4 | Not applicable | | | |

| **RINSE AFTER RESIN REGENERATION STAGE** | | | | | | | | |
|---|---|---|---|---|---|---|---|---|
| DIW | 2.0 | 7.3 | 3.2 | 0.84 | Not applicable | | | |
| DIW | 1.7 | 7.3 | < 0.020 | < 0.005 | | | | |
| DIW B | 0.3 | 7.3 | < 0.020 | < 0.005 | | | | |
| DIW B | 0.3 | 7.3 | < 0.020 | < 0.005 | | | | |
| | | | | | | | | |

The total volume of effluent before beginning rinsing was substantially identical to the amount of feed. The aggregated effluent was analyzed and found to contain 1.11 grams of iron per liter and 0.090 grams of sodium per liter. Therefore, slightly less than half of the original sodium content was removed from the used autodeposition bath during the process, but the rejuvenated bath did not show any evidence of instability within the time of observation. Other data, however, suggest that this is close to the maximum percentage of sodium that can be removed without incurring a serious risk of instability. The final concentration of iron in the rejuvenated used autodeposition bath is a fully suitable one for reuse under normal conditions for autodeposition.

After all of the volume of used autodeposition bath had been passed through the cation-exchange resin column at the end of increment 13, rinsing was begun. Only a little more than 4 BV's of deionized water were required to reduce the amount of autodepositable resin in the effluent to a satisfactory level. Only 2 BV's of regenerating 10 % HCl were needed for regeneration, and 2 additional BV's of subsequent rinsing with deionized water were sufficient to bring the iron and sodium concentrations in the next rinse down below their targeted levels.

Two successive backflushes with deionized water, each of only 0.3 BV, were then performed to guard against eventual plugging or other impairment of the flow rate of autodeposition bath through the cation-exchange resin column. At this point, the column is ready for re-use.

### Examples Group 2, Illustrating Use of Preferred Large-Scale Process Equipment

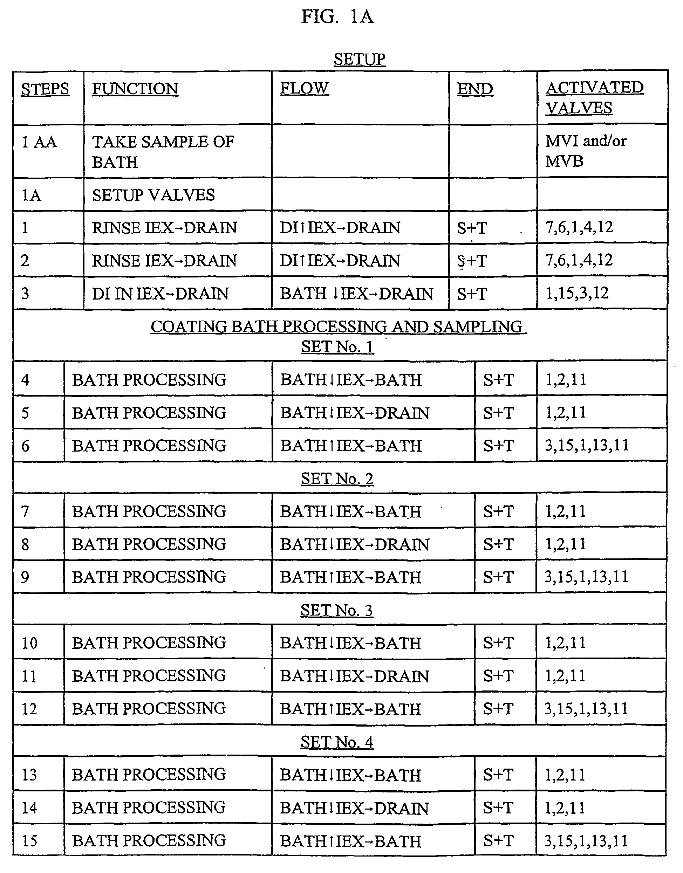

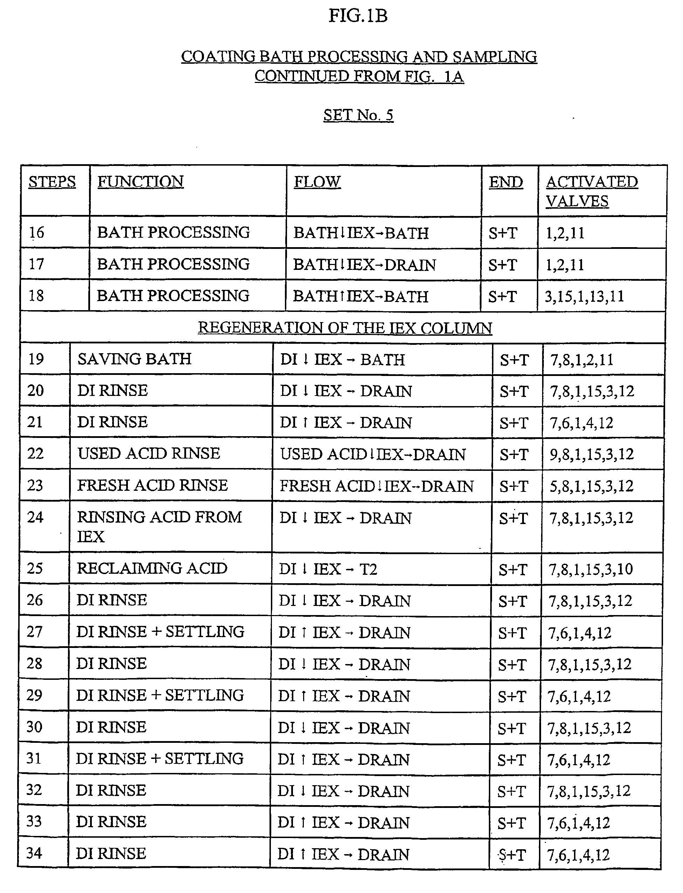

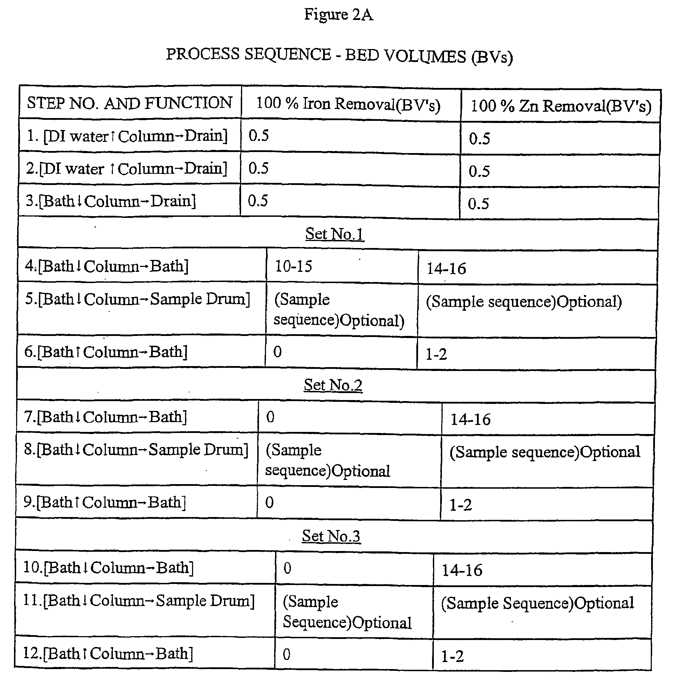

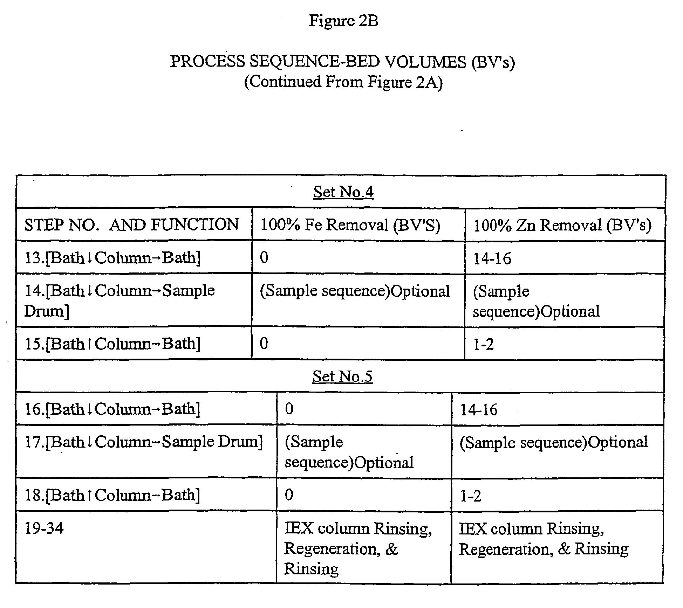

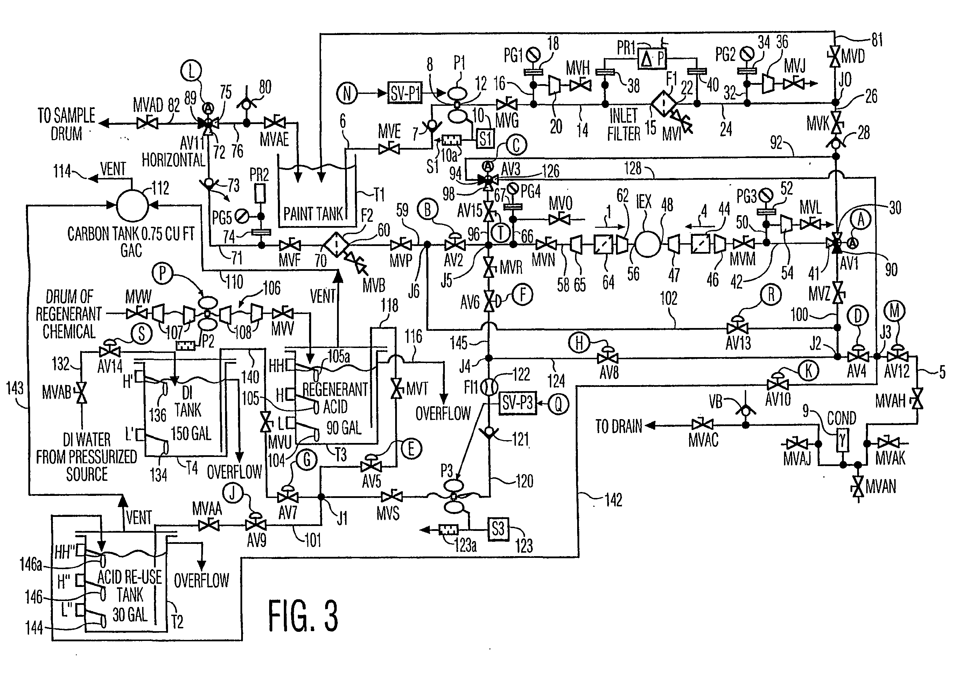

The steps of the process shown in Figures 1A and 1 B are divided into three groups, the first being "SETUP" including Steps 1AA, 1A, and 1 through 3; the second being "COATING BATH PROCESSING AND SAMPLING" including Steps 4 through 18; and the third being "REGENERATION OF THE IEX COLUMN" including Steps 19 through 34. In all steps, the direction of flow through an IEX column, the number of strokes S of the pump producing that flow and the maximum time T permitted must be determined using an empirical process, and are determined for each particular application. In Steps No. 2 and No. 34, flow is terminated when a given conductivity, γ, is reached or a maximum time T has elapsed. The valves activated during each step are identified in the rightmost column of the tables in Figures 1 A and 1 B by the same numbers as are used for these valves in Figure 3. The first step in Set No.1 is Step No.4 that provides for bath to be passed from the paint tank T1 (see Figure 3), down through the IEX column and back to the paint tank T1. Step No. 5, the second step in Set No.1, provides for a sample of the bath to be taken, if desired, and Step No. 6, the third step in Set No.1, provides for bath to be passed up through the IEX column. Suggested amounts of flow in BV's for the Steps No. 1 through No. 18 are set forth in a table in Figures 2A and 2B.

The CPU sends instructions for each step and usually starts the next step when the previous step has been completed, as is indicated by a required number of strokes S of the pertinent pump having been made or a maximum time T having elapsed. Less often, the next step is initiated after rinse water from the column has attained a given low level of acidity as indicated by conductivity or when a maximum time has elapsed. When a particular task is completed, the CPU receives instructions from the relevant device, responds to the instructions, and sends a new instruction for the next step. Records of data are kept in integer files so as to be available for controlling the process.

In the SETUP group, a preliminary sample may be taken in Step No. 1AA, the valves placed in their initial positions in Step No. 1A, the IEX column rinsed in Steps No.1, and No.2 and DI water prevented from reaching the bath tank T1 in Step No.3.

In the COATING BATH PROCESSING AND SAMPLING group, the Steps No.4 through No.18 are divided into five identical sets, Sets No.1, No.2, No.3, No.4, and No.5.

When only iron cations are to be removed, all of the bath that is to flow through the IEX column before the column is regenerated is passed during Step No. 4, and, if a sample is desired, Step No. 5 is performed. If a sample is not desired, the S for Step No. 5 is set to zero. Since it is not generally desired that there be an upward flow of bath through the IEX column when iron cations are being removed, the number of strokes S in Step No. 6 is set to zero as shown in Figure 2A. When, as is usual, the column is to be regenerated at this point, no further samples are taken, the strokes S for Steps No.7 through No.18 are also set to zero, as shown in Figures 2A and 2B, and the next step actually performed is Step No. 19 in the REGENERATION OF THE IEX COLUMN group.

When removing zinc cations in the presence of iron cations, a much larger number of BV's, e.g. 200, are passed through the IEX column. In order to avoid clogging, the direction of flow through the column may be reversed a number of times. Since a downward flow occurs in the first Steps No.4, No.7, No.10, No.13, and No.16 of the Sets No.1 through No.5, reversals of flow are obtained by setting the number of strokes S in the third Steps No.6, No.9, No.12, No. 15, and No.18 to other than zero. Samples of respective volumes can be taken in any of the second Steps No.5, No.8, No.11, No.14, and No.17. As previously mentioned, the number of BV's is determined empirically, and is dependent upon the concentrations of metal. If there are only iron cations or zinc cations, the determination to regenerate the column is based on whether or not the column is full. This dermination can be made by comparing successive samples at a late point in the flow to see if any more ions can be removed.

The table of Figures 2A and 2B illustrates in the middle column an example of the BV's of flow in Steps No.1 through No.18 that may used when iron cations are being removed in accordance with the invention, and in its right hand column an example of the BV's of flow in Steps No.1 through No.18 that may be used when zinc cations are being removed in accordance with the invention. The middle column indicates that bath flows only in the Step No.4 when iron cations are being removed, and the right hand column indicates that there are reversals of flow of bath when zinc cations are being removed.

In order to avoid graininess or other imperfections in the coating deposited on an object in the bath, the flow of the bath through the IEX column must exceed a given amount, but this may vary with the design of the apparatus.

In the group of steps for the REGENERATION OF THE IEX COLUMN, the column is rinsed with used acid, fresh acid, and DI water, as indicated in Figure 1 B. The direction of flow of the DI water is reversed a number of times.

### The Flow Paths

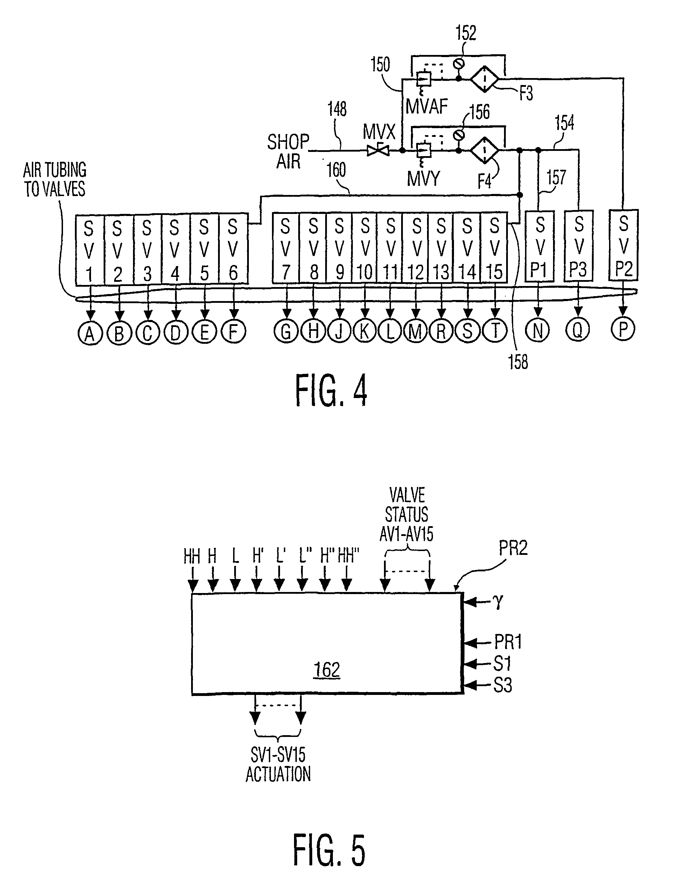

The paths of flow in the apparatus illustrated in Figure 3 of bath, used acid, acid, and DI water are generally designated by indicating pumps, valves and junctions through which a flow passes. Automatic valve designations begin with an A. When three port automatic valves are not activated, flow is between undarkened ports. When they are activated, the flow is between the darkened port and the port adjacent to it. Two port automatic valves are closed unless activated. The circled capital letters in Figure 3 correspond to the air ports in Figure 4 that control the associated valve or pump.

Metal substrates are coated by placing them in a coating or paint tank T1 containing an autodepositing bath solution. As the coating proceeds, the concentration of iron and/or zinc cations, depending on the metal being coated, increases. Before this concentration builds up to a value that could cause the coating to be grainy or the coating dispersion to coagulate, iron cations are removed by drawing about 15 BV's of bath from the tank T1 with pump P1 and forcing this bath through filter F1 and valve AV1 to the top 48 of an IEX column where iron and zinc cations are removed. From the bottom 56 of the IEX column, the flow proceeds through valve AV2, filter F2, and valve AV 11 back to the tank T1. The flow is downward through the IEX column as indicated by right-to-left pointing arrow 4. When zinc cations are being removed, the direction of the flow of bath through the IEX column is reversed from time to time so as to flow upwardly through the IEX column as indicated by left-to-right pointing arrow 1. This upward flow is via the valves AV3 and AV15 to the bottom 56 of the IEX column. From the top 48 of the IEX column, the flow passes through valve AV1 and AV13 to a junction J6 from whence it flows via the filter F2 and the valve AV11 to the tank T1.

Whenever a sample of bath emerging from the IEX column is desired, the valve AV11 is activated so as to direct flow to a sample drum rather than to the tank T1. When the IEX column is to be regenerated, acid that has been reclaimed or used may be pumped from tank T2 to the top 48 of the IEX column with pump P3. The flow is via valve AV9, junction J1, junction J4, valve AV8, junction J2, and valve AV1. From the bottom 56 of the IEX column, the flow is via valve AV15, valve AV3, and valve AV12 to a drain.

Whether or not reclaimed and/or used acid is utilized as set forth in the immediately preceding paragraph, fresh acid is pumped from a tank T3 to the junction J1 via valve AV5 by the pump P3. From the pump P3 it flows in the same path as was described in the immediately preceding paragraph.

Acid rinse or rinses are followed by rinses with DI water that is pumped from a tank T4 to the junction J1 via valve AV7 by the pump P3. The flow of DI water from the junction J1 to the drain can be along the same path as just described for used acid and acid, namely through J4, AV8, J2, AV1, AV15, AV3, and AV12 so as to pass down through the IEX column.

Upward flow of DI water through the IEX column is advantageous to ensure that the bed is fluidized, and thoroughly rinsed. This flow is via the valve AV6 to the junction J5 from whence it passes up through the IEX column and via the valves AV1, AV4 and AV12 to the drain.

It should be noted that, although not shown, mechanical couplers are provided whereby each operating component can be removed for maintenance.

The flows of DI water will be generally referred to, but for the most part, the manner in which they are accomplished is described near the end of this description.

### Setup

### Step No.1 AA. No.1 A No.1-3

In Step 1 AA, a sample of the bath may be taken using manual valve MVI for samples before the IEX, and/or manual valve MVD for samples after the IEX. In Step 1A, all valves are indexed to proper start positions, in which automatic valves AV2, AV4 and AV12 through AV15 are closed, and the two position three port valves AV1, AV3 and AV11 are positioned so that flow is between the ports not having a darkened triangle. When one of these latter valves is activated, the darkened port is opened and the flow is between it and the adjacent port. Manual valves MVAE, MVAA, MVU, MVE, MVP, MVT, MVS, MVG, MVR, MVN, MVF, MVV, MVK, MVM, MVAC, MVZ, and MVAH, are normally open. Manual valves MVAD, MVW, MVAB, MVH, MVO, MVB, MVI, MVAC, MVJ, MVAJ, MVAN, and MVAK are normally closed.

### Preliminary Rinse Steps No.1 and No.2

In Step No.1 DI water is passed upwardly through the IEX column as indicated by arrow 1 to a drain using an S and T (stroke and time) mode of termination. This brings any unwashed or leached acid from the previous run toward the top 48 of the IEX column. When Step No.2 is enabled, the conductivity of the rinse water is indicated by an indicator 9 in line 5 leading to a drain, and Step No.2 continues until a preset low-level conductivity γ is reached, e.g.50 µS. As will be seen, the last step 34 includes a check for conductivity so that the check in Step No.2 may seem unnecessary, but after Step 34 is performed, some traces of the HCl regenerant acid may emerge from "dead zones" in the column. If present, such acid is rinsed out in Step No.2. An integer file in controller 162 shown in Figure 5 will keep track of the time required, and an increase in the time will indicate problems in the IEX column such as insufficient rinsing due to tunneling in the resin bed (not shown) thereof. In both of these steps the automatic valve AV1 is moved from its setup position by air from the port A of Figure 4. As shown in Figures 2A and 2B, it is suggested that only one-half a BV of Dl water be passed through the IEX column in each of Steps No. 1 and No. 2, regardless of whether only iron cations or zinc cations are present. This assumes that the IEX column was rinsed properly in Step 34.

### INITIAL FLOW OF BATH TO IEX COLUMN: STEP No.3

### [Bath ↓ IEX -H₂O-DRAIN]

After the rinsing of the IEX column in Step No. 2, the column is full of DI water, and to prevent the DI water from being conducted to the bath tank T1, the water is directed to a drain. Reference is now made to Figure 3 for a description of the manner in which bath from the coating or paint tank T1 is passed through the IEX column in a downward direction indicated by arrow 4. One end of an outflow line 6 that has a manual valve MVE and a check valve 7 therein is located near the bottom of the tank T1, and its other end is attached to the inlet port 8 of a pump, P1, that receives its operating air via a solenoid controlled valve SV P1 that is connected to a port N as shown in Figure 4. The encircled capital letters in Figure 3 indicate that operating air is obtained from like referenced ports in Figures 4 and 5. Connected to pump P1 are a muffler, 10a, and a stroke counter, 10, which provides a signal S1 of the number of strokes the pump P1 has made in a run so as to indicate to the controller 162 of Figure 5 the total volume of bath that has been pumped. Check valves are included to prevent autodeposition bath and HCl from flowing back into tank T1, for example.

Outlet port 12 of the pump P1 is coupled via line 14 having a manually controlled valve MVG therein connected to one side 15 of filter F1, which has a manually controlled valve MV1 coupled thereto for taking a sample. A sight pressure gage, PG1, is connected to line 14 via a line, 16, having a gage isolator 18 therein, and a manually controlled valve, MVH, is connected to line 16 via a size adapter, 20, for obtaining a sample if desired.

The output side 22 of filter F1 is coupled via line 24 to junction JO with line 26, the latter having manually controlled valve MVK and check valve 28 therein, and line 26 is connected to inlet port 30 of automatic valve AV1, which is controlled by air at port A in Figure 4. A sight pressure gage, PG2, is connected to line 24 via a line, 32, having gage isolator 34 therein, and manually controlled valve MVJ is connected to line 32 via size adapter 36 for obtaining a sample if desired. A signal, PR1, for the pressure drop across filter F1 is obtained by a differential gage pressure sensor, IP, connected between lines 14 and 24 by isolators 38 and 40 respectively.

With valve AV1 in its setup position, bath flows from inlet port 30 of valve AV1 and therethrough to port 41 of valve AV1, and from port 41 the bath flows via line 42, which has manually controlled valve MVM, strainer 44, size adapter 46 and size adapter 47 therein, to the top 48 of the IEX column. A sight pressure gage, PG3, is connected via line 50 having an isolator 52 therein to line 42. A sample may be taken via a manually controlled valve, MVL, which is connected via size adapter 54 to line 50. Strainer 44 is a coarse filter that prevents beads of the IEX column from plugging valves in the system.

If all the effluent from the IEX column were conducted back to the tank T1, the water in the IEX column resulting from the rinsing Steps No.1 and No.2 would undesirably flow to the tank T1. In order to prevent this from occurring, the water displaced from the IEX column by the initial flow of the bath into it is conducted to a drain in the following manner.

All effluent from the bottom 56 of the IEX column passes to junction J5 via a line, 58, that includes size adapter 62, coarse strainer 64, size adapter 65, and manually controlled valve MVN. Sight pressure gage PG4 is connected by line 66 having isolator 67 therein to line 58, and manual valve MVO is coupled via size adapter 69 to line 66 for the purpose of providing a sample if desired.

From junction J5, effluent from the IEX column, which at this point is water, passes via line 96 having automatic valve AV15 therein to port 98 of three way automatic valve AV3. The automatic valve AV15 is activated by air from port T of Figure 4. Since the valve AV3 is in its setup position, the water flows via an outlet port, 126, that is connected to one end of line 128. The other end of line 128 is connected at junction J3 with one end of line 5, leading to a drain. Line 5 includes an automatic valve, AV12, that is opened by air from port M in Figure 4, and manual valves MVAH, MVAK, MVAJ, and MVAC that are useful during maintenance procedures. A conductivity probe 9 is connected to the line 5 to measure conductivity, and manual valve MVAN is provided for drainage during maintenance.

### Coating Bath Processing

### (Bath ↓ IEX ÷ BATH), Step No. 4

Just as bath starts to emerge from the IEX column in Step No.3, as determined by the signal S1 indicating that the pump P1 has pumped a volume of bath equal to 0.5 BV of the IEX column, the air pressure at port M of Figure 4 is removed so as to permit valve AV12 to assume its closed setup position, in this example.

Bath now arriving at junction J5 passes through an automatic valve, AV2, that is opened by air from port B of Figure 4 to junction J6, and from J6 the bath passes via line 59 to input 60 of filter F2. Output 70 of filter F2 is connected via line 71 to input port 72 of automatic valve AV11, which is in its setup position. Sight pressure gage PG5, which indicates the pressure at the output 70 of F2, is coupled to line 71 via isolator 74. Pressure switch PS2 provides a signal, PR2, when the pressure at the output 70 of F2 is below a given value, 0.8 bar for example. With AV11 in its setup position, the bath flows to outlet port 75 and via line 76 having valve MVAE therein to tank T1. Check valve 80 is connected to line 76 between automatic valve AV11 and manual valve MVAE to act as a vacuum breaker to the line 76. When iron cations are to be removed, only ten to fifteen BV's are allowed to flow through the IEX in this manner, and when zinc cations are to be removed, 14-16 BV's are allowed to flow as indicated in Figure 2A. Line 81 having mechanical valve MVD therein leads from junction JO back to bath tank T1 in order to conduct bath back to T1 in case the IEX column becomes clogged.

### Bath ↑ IEX 6 Bath, Steps No.6, No.9, No.12, No.15, No.18

The reversal of bath flow from a downward direction to an upward direction is accomplished by activating AV1 so that flow is between its ports 41 and 90. In addition, line 92 is connected from line 26 to normally closed inlet port 94 of automatic valve AV3. AV3 is then actuated by air from port C of Figure 4, so as to connect ports 94 and 98. Line 96 is connected between port 98 of valve AV3 and junction J5 with line 58 that, as previously noted, leads to the bottom 56 of the IEX column. Automatic valve AV15 connects lines 98 and 96. Thus the bath flows from T1 via the lines 6, 14, 24, 26 and 92, automatic valve AV3, line 96, line 58, the IEX column and line 42 to port 41 in automatic valve AV1. It emerges from port 90 in valve AV1 via a line, 100, having manually operated valve MVZ therein and passes from line 100 to one end of line 102, which has an automatic valve, AV13, therein that is activated by air from port R of Fig 4. The other end of line 102 is connected to line 59 at junction J6 between automatic valve AV2 and manual valve MVP. The automatic valve AV2 is between the junctions J5 and J6 and is closed, so that bath flows back to tank T1 via filter F2, line 71, automatic valve AV11, and line 76.

### Samples

### Bath I IEX 6DRUM Steps 5,8,11,14 and 17

If it is desired to take samples of the effluent from the IEX column after Step No.4, whether iron cations or zinc cations are being removed, as respectively indicated in the middle and right columns of Figures 2A and 2B, valve AV11 may be activated by air from port L of Figure 4 in Steps No.5, No.8, No.11, No.14, and No.17, so that line 71 is connected via ports 72 and 89 to line 82 leading to a sample drum not shown. Manual valve MVAD is included in line 82. If a sample is not to be taken, S in Step No. 5 is set to zero.

Referring now to the middle column of Figures 2A and 2B, which set forth a suggested procedure when only iron cations are present in the bath, it is noted that samples may be taken during Steps No.5, No.8, No.11, No.14 and No.17, but that there is no upward flow through the IEX column in any of them because clogging does not occur. Of course, there could be upward flow if needed. Furthermore, because all of the bath required to flow for the purpose of removing iron cations has flowed in Step No. 4, no further downward flow is suggested in the first step of each set. As previously noted, the procedure can go directly to Step No.19 from either Step No.4 or Step No.5 by setting the pump strokes S for all subsequent steps through Step No.18 to zero.

Referring now to the right hand column of Figures 2A and 2B, which set forth a suggested procedure when both iron and zinc cations are present in the bath, it is noted that a plurality of samples may be taken during Steps No.5, No.8, No.11, No.14, and No.17. But regardless of whether a sample is taken or not, there is a downward flow of bath in the first step of each set and an upward flow in the last step in each set.

### Regeneration of the IEX Column

### Rinsing Steps No.19 - No.21

After completion of coating bath processing Step No.4 in the removal of iron cations or the removal of zinc cations in Step No.18, the IEX column must be regenerated. This starts with a rinse of DI water in Step No.19. At this point the IEX column is filled with the very valuable bath. If the effluent from the IEX column were permitted to flow to the drain via line 5, the bath would be lost. To prevent this from occurring, the valving remains the same as when the bath is being circulated down through the IEX column and back to tank T1 in the same manner as in Step No.4, and as soon as DI water emerges from the IEX column, the valving is changed to that of Step No.3 so as to direct the water via valves AV4 and AV12 and line 5 to the drain. The time of emergence is determined by the number of strokes in Step No.4. In Step No.20 the downward flow of DI water is continued, but in Step No.21 the flow direction is reversed. As previously noted, the flows of DI water will be described infra.

### Reclaimed Acid Flow, Step No.22

Restoring the sites of the IEX column to their H condition is commenced in Step No.22 by a flow of acid, usually including some reclaimed or used acid, through the IEX column. As will be explained, used acid is formed and delivered to a tank T2, but as it is derived after fresh acid and DI water have passed through the IEX column, the detailed explanation is more easily understood after the acid flow and DI water flow have been described. The flow path of the used acid is from tank T2 to junction J1 via line 101 having therein manual valve MVAA and an automatic valve, AV9, that is actuated by air from a port J in Figure 4. From J1 the flow path of used acid is the same as that of fresh acid from tank T3 as is described below in the description of Step No.23.

### Filling Acid Tank T3

Acid that is to flow down through the IEX column so as to regenerate it is stored in a tank, T3, that is filled when needed by activating pump P2 in response to signal L provided by low level indicator 104 and deactivating pump P2 when signal H is provided by high level indicator 105. If high level indicator 105 fails, the high-high indicator 105a sends signal HH to deactivate pump P2. The pump P2 is in a line, 106, that is connected between a drum of acid, not shown, and tank T3 and includes manually operated valve MVW on the input side of pump P2 and manually operated valve MVV on the output side. Size adapters 107 are connected between valve MVW and pump P2 and size adapters 108 are connected between pump P2 and valve MVV. Venting for acid tank T3 is supplied by connection of line 110 from T3 to a scrubber tank, 112, that is connected to vent line 114. Overflow line 116 is connected to the tank T3.

### Fresh Acid ↓ IEX 6Drain Step No.23

In Step No.23, acid from tank T3 flows down through the IEX column. One end of output line 118, which contains manually operated valve MVT and an automatic valve, AVS, that is actuated by air from port E of Figure 4, is mounted near the bottom of tank T3. The other end of line 118 is connected to junction J1 along with one end of line 120 and one end of line 101. The line 120 includes a pump, P3, that is operated by air from port Q of Figure 4, and has muffler 123a and stroke counter 123 providing signal S3. A manual valve, MVS, that is connected between pump P3 and junction J1, check valve 121, and flowmeter 122 are also in line 120. The other end of line 120 is connected to junction J4 with one end of a line, 124, that includes an automatic valve, AV8, that is actuated by air from port H in Figure 4. The other end of line 124 is connected to junction J2 with an end of line 100. Acid drawn from tank T3 by pump P3 passes through line 118, automatic valve AV5, automatic valve AV8 in line 124 that is actuated by the air from port H of Figure 4, and through line 100 to port 90 of AV1. AV1 is activated so that acid flows down through line 42, the IEX column, and line 58 to junction J5 with the line, 96, that leads to port 98 of automatic valve AV3. AV3 is not activated; therefore port 98 and port 126 of AV3 are open, thus permitting the acid to flow through line 128 to junction J3 in line 5 between valves AV4 and AV12. AV12 is actuated by air from port M in Figure 4.

It can be seen that the recovered or reused acid in tank T2 can be made to flow in Step No.22 to junction J1 by opening valve AV9. From junction J1 recovered or reused acid flows along the same path as that followed by the acid from tank T3 as described immediately above.

### DI Water Flow

### Filling The DI Tank T4

DI water is supplied from a pressurized source, not shown, to DI water tank T4 via line 132 having manual valve MVAB and an automatic valve, AV14, that is actuated by air from port S in Figure 4. A low level signal, LN, is provided by low level detector 134 and a high level signal, HN, is supplied by high level detector 136 so that the filling may be controlled by controller 162 of Figure 5.

### DI Water ↓ IEX6Drain

Steps No:20, No.24, No.26, No.28, and No.30 call for a flow of DI water 9IEX 6drain. DI water is pumped by pump P3 that was used to pump acid from tank T3 and recovered acid from tank T2. A line, 140, has one open end near the bottom of tank T4 and the other end connected to junction J1. A manually operated valve, MVU, and automatic valve AV7 are included in the line 140. Actuating air for valve AV7 is from port G of Figure 4. From junction J1, the water flows via line 120, which includes pump P3, to junction J4 with the line 124 that includes automatic valve AV8 and via line 124 to junction J2. Water then flows to port 90 of activated valve AV1 via line 100 and down through the IEX column to line 96 at junction J5 with line 58. Ports 98 and 126 of AV3 are open, so that the water flows through line 128 to junction J3. With valve AV12 open, the water flows to the drain via line 5.

### Reclaiming Acid

In Step No.25, the DI water also flows down through the IEX column to junction J3 as just described, but with valves AV4 and AV12 closed, the water flows via line 142 to tank T2. Signals L", H", and HH", for the low, high, and high-high levels are provided by detectors 144, 146, and 146a, respectively. These signals control pump P3 in the same way that pump P2 was controlled by the signals L, H, and HH. The tank is vented via line 143 to tank 112. The reason for not directing the DI water emerging from the IEX column to tank T2 in Step No. 24 is that this DI water contains too many iron cations or zinc cations to be effectively reusable.

### DI Water ↑ IEX 6Drain

DI water passes up through the IEX column to the drain in Steps No. 1, No.2, No.21, No.27, No.29, No.31, No.33, and No. 34. In doing so it passes from junction J1 to junction J4. Instead of leaving junction J4 via line 124, the water passes through an open valve, AV6, that is activated by air from port F in Figure 4 and located in line 145 to junction J5, up through the IEX column to port 41 of valve AV1, which is moved from its setup position by air from port A of Figure 4, and via port 90 of AV1 and line 100 to junction J2. In order to reach the drain at the end of line 5, AV4 and AV12 are open. At the ends of Steps No. 27, No. 29, and No. 31 there is a delay of thirty seconds to permit settling of resin beads in the IEX column that can be flushed out on the next down flow.

### Conductivity Control

Steps 2 and 20 are terminated when the non-contact, electrodeless conductivity detector 9 in fluid line 5, receives bath from the IEX column acid provides a signal γ indicating that the conductivity of the fluid is less than a given amount.

### Pump And Valve Actuation System

Reference is made to Figures 4 and 5. The pumps P1, P2 and P3, and the automatic valves AV1 through AV15 are actuated or controlled by the system schematically represented in these figures. Pressurized air (SHOP AIR) from a source not shown is supplied via the line 148 having a manual valve MVX therein. Compressed air for operating the pump P2 is supplied via a line, 150, having pressure regulator MVAF and filter F3 therein. Pressure gage 152 is connected to line 150 so as to give a readable indication of the air pressure at the input of filter F3. A solenoid valve, SVP2, is mounted in line 150 between filter F3 and port P connected to the pump P2. Compressed air for pump P3 is provided at port Q via a line, 154, that is connected to line 148 and has pressure regulator MVY and filter F4 therein. A pressure gage, 156, is connected to line 154 so as to give a readable indication of the air pressure at the input of filter F4. Compressed air for pump P1 is provided at port N by connecting port N to line 154 at the output of filter F4 with line 157.

Compressed air to the solenoid controlled valves, SV7 through SV15, that supply air to the automatic valves AV7 through AV15 respectively via ports G, H, J, K, L, M, R, S, and T respectively is provided by a line, 158, that is connected to line 154 at the output of filter F4. Compressed air for the solenoid controlled valves SV1 through SV6 that respectively supply air to automatic valves AV1 through AV6 via ports A, B, C, D, E, and F is provided by a line, 160, that is connected to the line 158.

### Controller

Figures 4 and 5 illustrate the signals received and transmitted by controller 162 for carrying out the steps of the embodiment of the invention set forth in Figures 1 A and 1 B. Status signals indicating the positions of the automatic valves AV1 through AV15 are provided at all times, and actuating signals are provided as required to the solenoid controlled valves SV1 through SV15 of Figure 4. The strokes S1 of bath pump P1 and the strokes S3 of the pump P3 for DI water, acid, and reused acid are provided after the start of a step. The signals L, H, HH; L', H', HH' and L", H", HH" respectively representing low, high, and high-high levels in tanks T3, T4 and T2 are also provided. A signal is provided by conductivity probe 9 that indicates when the conductivity of fluid emerging from top 48 of the IEX column is below a given value. Finally, signals PR1 and PR2 are provided and indicate when the pressures at output 22 of filter F1 and output 70 of filter F2 exceed a given value. The controller 162 has a clock which is programmed to indicate the time elapsed in each step.

It has been found that an SAC gel type resin usually has a capacity of eighteen to thirty milligrams ("mg") of iron cations for each cubic centimeter ("cc") of resin and fourteen to twenty-five mg of zinc cations for each cc of resin. Thus, when these capacities are approached, the IEX resin should be regenerated. Typically the IEX column reaches capacity during flow of 15 BV's in removing iron or during flow of 200 BV's when removing zinc. However, for each application, the actual number of BV's required to saturate depends upon the amount of iron and/or zinc in the bath.

In order to prevent unsatisfactory coating, the iron cations should be kept below 2.7 g/l or below 2,700 parts per million. Therefore, when the limit is exceeded, as indicated by testing a sample, the apparatus starts the regeneration operation. Typically, laboratory tests are conducted on the test sample. In applications where a paint line is being operated in a consistent manner with a steady work load, the number of IEX cycles required to maintain the iron level in the correct range tends to be consistent. In such applications, the concentration of iron cations is titrated periodically to determine the correct usage of the IEX, both for processing the coating bath, and for regeneration of the IEX column. Similar comments are applicable for zinc.

The present inventors have built an engineering prototype of the above-described system. From operation of the system, it has been found that for iron removal from 8 to 15 BV's of bath passed through the IEX represents a broad range, and from 10 to 12 BV's a typical or normal operating range for iron removal. For zinc removal, from 100 to 400 BV's represents a broad range, and from 200 to 300 BV's a typical or normal operating range.

## Claims

1. A process for removing at least one of iron and zinc cations from an autodeposition bath composition which comprises: passing said autodeposition bath composition in one direction through a bed volume of gel type, solid, strong acid cation ion-exchange (SAC IEX) resin, at a rate of at least 24 bed volumes per hour ("BV/hr").

2. The process according to claim 1, wherein the passage of the autodeposition bath composition in one direction through the bed volume of SAC IEX resin is accomplished by circulating the autodeposition bath composition between the bed volume of SAC IEX resin and a bath tank that does not contain the SAC IEX resin.

3. The process according to claim 2, whereby:
iron cations are removed from the autodeposition bath which comprises:
(a) circulating from about 15 to about 30 BV's of autodeposition bath composition through the bed volume of SAC IEX resin;
(b) regenerating the bed volume of SAC IEX resin by passing acid through the bed volume; and
(c) rinsing the regenerated bed volume of SAC IEX resin by passing water through the bed volume.

4. The process according to claim 2, wherein,
zinc cations are removed from the autodeposition bath composition which comprises;
(a) circulating not more than about 50 BV's of the autodeposition bath composition through the bed volume of SAC IEX resin in a first direction of flow; reversing the direction of flow of the autodeposition bath composition through the bed volume to expand the bed volume; reversing the flow of the autodeposition bath composition to the first direction;
(b) regenerating the bed volume of SAC IEX resin after at least about 100 BV's of autodeposition bath composition are circulated through the bed volume of SAC IEX resin by passing acid through the bed volume; and
(c) rinsing the regenerated bed volume of SAC IEX resin by passing water through the bed volume.

5. The process according to claim 3 or 4, wherein the rinsing continues until the con ductivity of the rinse water emerging from the bed volume is less than 50 µS.

6. A process according to claim 1, wherein:
said autodeposition bath composition has been previously used for autodeposition and does not contain a concentration of dispersing agent selected from the group consisting of cationic surfactants, amphoteric surfactants and protective colloids which would cause the autodeposition bath composition to become unstable within 1000 hours; selecting
a rejuvenation target concentration value for each of iron and zinc, at least one of said rejuvenation target values being smaller than the concentration of the corresponding element in said previously used autodeposition bath composition;
the bed volume of SAC IEX resin is confined, together with and in contact with a known volume of an aqueous based liquid that has concentrations of dissolved iron and zinc cations that are not larger than the concentrations of dissolved iron and zinc cations in said used autodeposition bath composition, in a container that has a set, which may have a single member or a plurality of members, of first liquid permeable openings therein, and a distinct set, which may have a single member or a plurality of members, of second liquid permeable openings therein, said sets
of first and of second liquid permeable openings being mutually exclusive sets, so that a flow of liquid at a constant rate into the container successively through said set of first liquid-permeable openings, into contact with said bed volume of SAC IEX resin confined within the container, and out from the container through said set
of second liquid-permeable openings can be maintained by means for causing a flow of liquid, without thereby displacing the SAC. IEX resin from said container therefor;
causing said used autodeposition bath composition to flow at least once through the set of first liquid-permeable openings into said container and into contact with the SAC IEX resin confined therein, thereby converting the used autodeposition bath composition into a multivalent-cation-content-reduced used autodeposition bath composition;
displacing the aqueous based liquid in contact with the cation-exchange resin before the used autodeposition bath composition was caused to flow into said container with the autodeposition bath composition and subsequently, after a volume of outflow equal to said known volume of said aqueous based liquid has occurred, said multivalent-cation-content-reduced used autodeposition bath composition is caused to flow out from said container, through said second set of liquid permeable openings, simultaneously with, and at a flow rate that is substantially identical to, the flow rate of said used autodeposition bath composition into said container, these flows into and out of said container being continued, optionally with:
(a) one or more interruptions of the flow, during which interruptions the flow optionally is reversed so that used autodeposition bath composition flows into said container through said set of second liquid permeable openings in the container and multivalent-cation reduced autodeposition bath composition flows out of said container through said set of first liquid permeable openings;
(b) one or more iterations of flow; or
(c) both one or more such interruptions and one or more such iterations,
until the concentration of each of iron and zinc in the effluent flowing out of the container has been reduced to or below said rejuvenation target concentration value, said effluent thereafter constituting a rejuvenated autodeposition bath composition.

7. The process according to claim 6, wherein:
the flow rate of used autodeposition bath composition into said container is a rate at which there is known a feed specific dynamic capacity of said bed volume of said SAC IEX resin for at least the one of iron and zinc for which the rejuvenation target concentration selected is smaller than the concentration of the corresponding element in said autodeposition bath; and
the flow of used autodeposition bath into said container is continued until an amount of said at least one of iron and zinc for which said feed specific dynamic capacity is known that corresponds to at least 25 % of said feed specific dynamic capacity has been transferred from said bed volume of used autodeposition bath composition to binding to the SAC IEX resin.

8. The process according to claim 7, wherein the rate of flow of used autodeposition bath composition is at least 30 BV/hr.

9. The process according to claim 7, comprising the following additional operations:
selecting a maximum dispersed autodepositable resin concentration, a minimum content of acid in said cation-exchange resin within said container, a minimum backflush volume, and a post-regeneration maximum concentration value for each of acid, iron, and zinc; and
after completion of the process according to claim 8, causing:
(1) a fresh first rinse liquid to flow at least once through one of said sets of first and second liquid permeable openings into said container and into contact with the SAC IEX resin confined therein, thereby converting the fresh rinse liquid to a used rinse liquid; and
(2) passing the used first rinse liquid out from said container, through the one of said sets of first and second liquid conduits not used for inflow, simultaneously with, and at a flow rate that is substantially identical to, the flow rate of fresh first rinse liquid into said container
the flows of fresh first rinse liquid into said container and of used first rinse liquid out of said container being continued until the last increment of outflowing used first rinse liquid does not contain a concentration of dispersed autodepositable resin that is greater than said concentration target maximum dispersed autodepositable resin concentration; and
(3) subsequently causing a fresh regenerant acid solution to flow at least once through one of said sets of first and second liquid- permeable openings into said container and into contact with the SAC IEX resin confined therein, thereby converting the fresh regenerant acid solution to a used regenerant acid solution; and
(4) passing the used regenerant acid solution out from said container, through the one of said sets of first and second liquid-permeable openings not used for inflow, simultaneously with, and at a flow rate that is substantially identical to, the flow rate of the fresh regenerant acid solution into said container
the flows of fresh regenerant acid solution into said container and of used regenerant acid solution out of said container being continued until the acid content of said bed volume of SAC IEX resin is not less than said target minimum acid content: and;
(5) subsequently causing a fresh second rinse liquid to flow at least once through one of said sets of first and second liquid-permeable openings into said container and into contact with the SAC IEX resin confined therein, thereby converting the fresh second rinse liquid to used second rinse liquid; and
(6) passing the used second rinse liquid out from said container, through the one of said sets of first and second liquid-permeable openings not used for inflow, simultaneously with, and at a flow rate that is substantially identical to, the flow rate of the fresh second rinse liquid into said container,
the flows of the fresh second rinse liquid into said container and of the used second rinse liquid out of said container being continued until an increment of said second rinse liquid does not contain more than said corresponding post-regeneration maximum value selected for any of acid, iron, or zinc,
a volume, of at least one of said used autodeposition bath composition, said first rinse liquid, said acid regenerant liquid, and said second rinse liquid having flowed into said container through said set of second liquid-permeable openings before the process is completed.

10. The process according to claim 9, wherein:
(a) the rejuvenation target concentration value for zinc is less than the actual concentration of zinc in the used autodeposition bath composition; and
(b) a volume of used autodeposition bath that is at least about 200 times the BV of SAC IEX resin confined within said container has passed through said volume of SAC IEX resin confined in said container, but not more than 90 times the BV of SAC IEX resin confined within said container has passed through said volume of said container in a first flow direction therethrough without having been interrupted by an interval in which some used autodeposition bath composition flows in a reverse direction to the first flow direction through the same volume of SAC IEX resin confined within said container.

11. The process according to claim 9, wherein:
(a) the rejuvenation target concentration value for iron is less than the actual concentration of iron in the used autodeposition bath composition; and
(b) a volume of used autodeposition bath that is from about 10 to about 30 times the BV of said SAC IEX resin confined within said container has passed through said volume of SAC IEX resin confined in said container.

12. The method of claim 1 wherein said autodeposition bath composition is passed through the bed volume of SAC IEX at a rate of from about 24 to about 45 BV/hr.

13. A process according to claim 1, **characterized by** interrupting and reversing flow of said autodeposition bath composition such that the autodeposition bath composition flows through the bed volume of gel type, solid, strong acid cation ion-exchange (SAC IEX) resin in a direction opposite the primary direction of flow.

14. The process of claim 13 further comprising returning the direction of flow to the primary direction of flow after allowing flow in the direction opposite said primary direction for a sufficient time such that when flow of the autodeposition bath through the bed volume is returned to the primary direction, pressure drop across the bed volume required to maintain an initially selected flow rate does not exceed the pressure drop initially required with the same bed volume when it was freshly prepared by more than 0.40 bar/meter of bed volume length in the primary direction of flow.

## Patentansprüche

1. Verfahren zur Abtrennung von Eisen- und/oder Zinkkationen aus einer Selbstabscheidungsbadzusammensetzung, das folgende Schritte umfasst: Durchleiten dieser Selbstabscheidungsbadzusammensetzung in einer Richtung durch ein Bettvolumen eines gelartigen, festen, stark sauren Kationenlonenaustauscherharzes (SAC IEX) mit einer Rate von wenigstens 24 Bettvolumina pro Stunde ("BV/h").

2. Verfahren nach Anspruch 1, wobei der Durchfluss der Selbstabscheidungsbadzusammensetzung in einer Richtung durch das Bettvolumen des SAC IEX-Harzes **dadurch** ausgeführt wird, dass die Selbstabscheidungsbadzusammensetzung zwischen dem Bettvolumen des SAC IEX-Harzes und einem Badbehälter, der das SAC IEX-Harz nicht enthält, zirkuliert.

3. Verfahren nach Anspruch 2, wobei Eisenkationen aus dem Selbstabscheidungsbad abgetrennt werden, das folgende Schritte umfasst:
(a) Zirkulieren von etwa 15 bis etwa 30 BV der Selbstabscheidungsbadzusammensetzung durch das Bettvolumen des SAC IEX-Harzes;
(b) Regenerieren des Bettvolumens des SAC IEX-Harzes durch Durchleiten von Säure durch das Bettvolumen und
(c) Spülen des regenerierten Bettvolumens des SAC IEX-Harzes durch Durchleiten von Wasser durch das Bettvolumen.

4. Verfahren nach Anspruch 2, wobei
Zinkkationen aus der Selbstabscheidungsbadzusammensetzung abgetrennt werden, das folgende Schritte umfasst:
(a) Zirkulieren von nicht mehr als etwa 50 BV der Selbstabscheidungsbadzusammensetzung durch das Bettvolumen des SAC IEX-Harzes in einer ersten Strömungsrichtung; Umkehren der Strömungsrichtung der Selbstabscheidungsbadzusammensetzung durch das Bettvolumen, um das Bettvolumen auszudehnen; Umkehren der Strömung der Selbstabscheidungsbadzusammensetzung in die erste Richtung;
(b) Regenerieren des Bettvolumens des SAC IEX-Harzes, nachdem mindestens etwa 100 BV der Selbstabscheidungsbadzusammensetzung durch das Bettvolumen des SAC IEX-Harzes zirkuliert haben, indem Säure durch das Bettvolumen geleitet wird und
(c) Spülen des regenerierten Bettvolumens des SAC IEX-Harzes durch Durchleiten von Wasser durch das Bettvolumen.

5. Verfahren nach Anspruch 3 oder 4, wobei das Spülen fortgesetzt wird, bis die Leitfähigkeit des aus dem Bettvolumen empordringenden Spülwassers weniger als 50 µS beträgt.

6. Verfahren nach Anspruch 1, wobei:
- die Selbstabscheidungsbadzusammensetzung zuvor zur Selbstabscheidung verwendet worden ist und keine Konzentration eines dispergierenden Mittels enthält, das aus der Gruppe ausgewählt ist, die aus Kationtensiden, amphoteren Tensiden und schützenden Kolloiden besteht, die die Selbstabscheidungsbadzusammensetzung innerhalb von 1000 Stunden instabil machen würden;
- ein Regenerationskonzentrationszielwert jeweils für das Eisen und Zink gewählt wird, wobei mindestens einer dieser Regenerationszielwerte kleiner ist als die Konzentration des entsprechenden Elements in dieser zuvor verwendeten Selbstabscheidungsbadzusammensetzung;
- das Bettvolumen des SAC IEX-Harzes zusammen und in Kontakt mit einem bekannten Volumen einer wasserbasierten Flüssigkeit, die Konzentrationen gelöster Eisen- und Zinkkationen enthält, die nicht größer sind als die Konzentrationen der gelösten Eisen- und Zinkkationen in der gebrauchten Selbstabscheidungsbadzusammensetzung, in einem Behälter eingeschlossen wird, der mit einem Satz, der ein einziges Element oder eine Vielzahl von Elementen von ersten flüssigkeitsdurchlässigen Öffnungen darin aufweisen kann, sowie mit einem getrennten Satz ausgestattet ist, der ein einziges Element oder eine Vielzahl von Elementen von zweiten flüssigkeitsdurchlässigen Öffnungen darin aufweisen kann, wobei diese Sätze von ersten und zweiten flüssigkeitsdurchlässigen Öffnungen sich gegenseitig ausschließende Sätze sind, so dass ein Flüssigkeitsstrom mit einer konstanten Rate nacheinander in den Behälter hinein durch den Satz von ersten flüssigkeitsdurchlässigen Öffnungen, in Kontakt mit dem Bettvolumen des innerhalb des Behälters eingeschlossenen SAC IEX-Harzes, und aus dem Behälter hinaus durch den Satz von zweiten flüssigkeitsdurchlässigen Öffnungen aufrechterhalten werden kann durch Mittel zur Erzeugung eines Flüssigkeitsstroms, ohne **dadurch** das SAC IEX-Harz aus dem Behälter deshalb zu verdrängen;
- die gebrauchte Selbstabscheidungsbadzusammensetzung zum Fließen mindestens einmal durch den Satz von ersten flüssigkeitsdurchlässigen Öffnungen in den Behälter und in Kontakt mit dem darin eingeschlossenen SAC IEX-Harz gebracht wird, wodurch sie in eine gebrauchte Selbstabscheidungsbadzusammensetzung mit reduziertem multivalentem Kationengehalt umgewandelt wird;
- die wasserbasierte Flüssigkeit in Kontakt mit dem Kationenaustauscherharz verdrängt wird, bevor die gebrauchte Selbstabscheidungsbadzusammensetzung zum Fließen in den Behälter mit der Selbstabscheidungsbadzusammensetzung gebracht wird und daraufhin, nachdem ein Abflussvolumen gleich dem bekannten Volumen der wasserbasierten Flüssigkeit eingetreten ist, die gebrauchte Selbstabscheidungsbadzusammensetzung mit reduziertem multivalentem Kationengehalt zum Fließen aus dem Behälter hinaus durch den Satz von zweiten flüssigkeitsdurchlässigen Öffnungen gebracht wird, und zwar gleichzeitig, und mit einer im Wesentlichen identischen Fließrate, mit der Fließrate der gebrauchten Selbstabscheidungsbadzusammensetzung in den Behälter hinein, wobei diese Ströme in den Behälter hinein und aus dem Behälter hinaus fortgesetzt werden, optional mit:
(a) einer Unterbrechung oder mehreren Unterbrechungen des Stroms, während welcher Unterbrechungen der Strom optional umgekehrt wird, so dass die gebrauchte Selbstabscheidungsbadzusammensetzung durch den Satz von zweiten flüssigkeitsdurchlässigen Öffnungen im Behälter in den Behälter hineinfließt und die Selbstabscheidungsbadzusammensetzung mit reduziertem multivalentem Kationengehalt durch den Satz von ersten flüssigkeitsdurchlässigen Öffnungen aus dem Behälter hinausfließt;
(b) einer Wiederholung oder mehreren Wiederholungen des Stroms oder
(c) sowohl einer Unterbrechung oder mehreren Unterbrechungen als auch einer Wiederholung oder mehreren Wiederholungen,
bis die Konzentration jeweils des Eisens und Zinks in dem aus dem Behälter heraus fließenden Abfluss auf oder unter den Regenerationskonzentrationszielwert reduziert worden ist, wobei der Ausfluss danach eine regenerierte Selbstabscheidungsbadzusammensetzung darstellt.

7. Verfahren nach Anspruch 6, wobei:
die Fließrate der gebrauchten Selbstabscheidungsbadzusammensetzung in den Behälter hinein eine Rate ist, bei welcher eine eingabenspezifische dynamische Kapazität des Bettvolumens des SAC IEX-Harzes für mindestens eines der Elemente Eisen und Zink bekannt ist, für die die gewählte Regenerierungszielkonzentration kleiner als die Konzentration des entsprechenden Elements in dem Selbstabscheidungsbad ist; und
das Fließen des gebrauchten Selbstabscheidungsbades in den Behälter hinein fortgesetzt wird, bis eine Menge von mindestens einem der Elemente Eisen und Zink, für das die eingabenspezifische dynamische Kapazität bekanntermaßen mindestens 25 % der eingabenspezifischen dynamischen Kapazität entspricht, von dem Bettvolumen der gebrauchten Selbstabscheidungsbadzusammensetzung zur Bindung an das SAC IEX-Harz übertragen worden ist.

8. Verfahren nach Anspruch 7, wobei die Fließrate der gebrauchten Selbstabscheidungsbadzusammensetzung mindestens 30 BV/h beträgt.

9. Verfahren nach Anspruch 7, das folgende zusätzliche Vorgänge umfasst:
Wahl einer maximalen Konzentration eines dispergierten Selbstabscheidungsharzes, eines minimalen Säuregehalts in dem Kationenaustauscherharz innerhalb des Behälters, eines minimalen Spülvolumens und eines maximalen Konzentrationswertes nach der Regeneration für jedes der Substanzen Säure, Eisen und Zink; und
nach Vollendung des Verfahrens nach Anspruch 8 Verursachen
(1) des Fließens einer frischen ersten Spülflüssigkeit mindestens einmal durch einen der Sätze von ersten und zweiten flüssigkeitsdurchlässigen Öffnungen in den Behälter hinein und zum Kontakt mit dem darin eingeschlossenen SAC IEX-Harz, wodurch die frische Spülflüsssigkeit in eine gebrauchte Spülflüssigkeit umgewandelt wird, und
(2) der Leitung der gebrauchten ersten Spülflüssigkeit durch einen der Sätze von ersten und zweiten Flüssigkeitsleitungen, die nicht für das Einströmen benutzt werden, aus dem Behälter heraus und gleichzeitig, und mit einer im Wesentlichen identischen Fließrate, mit der Fließrate der frischen ersten Spülflüssigkeit in den Behälter hinein,
wobei die Ströme der frischen ersten Spülflüssigkeit in den Behälter hinein und der gebrauchten ersten Spülflüssigkeit aus dem Behälter heraus fortgesetzt werden, bis die letzte Zunahme des Abflusses der gebrauchten ersten Spülflüssigkeit keine Konzentration eines dispergierten Selbstabscheidungsharzes enthält, die größer ist als der maximale Konzentrationszielwert der Konzentration des dispergierten Selbstabscheidungsharzes, und
(3) daraufhin des Fließens einer frischen regenerierenden Säurelösung mindestens einmal durch die Sätze von ersten und zweiten flüssigkeitsdurchlässigen Öffnungen in den Behälter und zum Kontakt mit dem darin eingeschlossenen SAC IEX-Harz, wodurch die frische regenerierende Säurelösung zu einer gebrauchten regenerierenden Säurelösung umgewandelt wird, und
(4) die Leitung der gebrauchten regenerierenden Säurelösung aus dem Behälter hinaus durch einen der Sätze von ersten und zweiten flüssigkeitsdurchlässigen Öffnungen, die nicht für das Einströmen benutzt werden, gleichzeitig, und mit einer im Wesentlichen identischen Fließrate, mit der Fließrate der frischen regenerierenden Säurelösung in den Behälter hinein,
wobei die Ströme der frischen regenerierenden Säurelösung in den Behälter hinein und der gebrauchten regenerierenden Säurelösung aus dem Behälter heraus fortgesetzt werden, bis der Säuregehalt des Bettvolumens des SAC IEX-Harzes nicht kleiner ist als der minimale Säurezielgehalt, und
(5) daraufhin des Fließens einer frischen zweiten Spülflüssigkeit mindestens einmal durch die Sätze von ersten und zweiten flüssigkeitsdurchlässigen Öffnungen in den Behälter und zum Kontakt mit dem darin eingeschlossenen SAC IEX-Harz, wodurch die frische zweite Spülflüssigkeit zu einer gebrauchten zweiten Spülflüssigkeit umgewandelt wird, und
(6) die Leitung der gebrauchten zweiten Spülflüssigkeit aus dem Behälter hinaus durch einen der Sätze von ersten und zweiten flüssigkeitsdurchlässigen Öffnungen, die nicht für das Einströmen benutzt werden, gleichzeitig, und mit einer im Wesentlichen identischen Fließrate, mit der Fließrate der frischen zweiten Spülflüssigkeit in den Behälter hinein,
wobei die Ströme der frischen zweiten Spülflüssigkeit in den Behälter hinein und der gebrauchten zweiten Spülflüssigkeit aus dem Behälter heraus fortgesetzt werden, bis eine Zunahme der zweiten Spülflüssigkeit nicht mehr als der entsprechende gewählte maximale Wert nach der Regeneration für eines der Substanzen Säure, Eisen und Zink enthält,
wobei ein Volumen von mindestens eines der gebrauchten Selbstabscheidungsbadzusammensetzung, der ersten Spülflüssigkeit, der sauren Regenerationsflüssigkeit und der zweiten Spülflüssigkeit durch den Satz von zweiten flüssigkeitsdurchlässigen Öffnungen in den Behälter geflossen ist, bevor das Verfahren abgeschlossen ist.

10. Verfahren nach Anspruch 9, wobei:
(a) der Regenerationskonzentrationszielwert für Zink kleiner ist als die tatsächliche Zinkkonzentration in der gebrauchten Selbstabscheidungsbadzusammensetzung und
(b) ein Volumen des gebrauchten Selbstabscheidungsbades, das mindestens etwa das 200-Fache des BV des innerhalb des Behälters eingeschlossenen SAC IEX- Harzes ausmacht, durch das innerhalb des Behälters eingeschlossene Volumen des SAC IEX-Harzes durchgeleitet wurde, aber nicht mehr als das 90-Fache des innerhalb des Behälters eingeschlossenen BV des SAC IEX-Harzes durch das Volumen des Behälters in einer ersten Fließrichtung hindurch geleitet wurde, ohne unterbrochen worden zu sein durch ein Intervall, während dessen etwas gebrauchte Selbstabscheidungsbadzusammensetzung in einer zur ersten Fließrichtung umgekehrten Richtung durch dasselbe Volumen des innerhalb des Behälters eingeschlossenen SAC IEX-Harzes fließt.

11. Verfahren nach Anspruch 9, wobei:
(a) der Regenerationskonzentrationszielwert für Eisen kleiner ist als die tatsächliche Eisenkonzentration in der gebrauchten Selbstabscheidungsbadzusammensetzung und
(b) ein Volumen des gebrauchten Selbstabscheidungsbades, das mindestens etwa das 10- bis etwa 30-Fache des innerhalb des Behälters eingeschlossenen BV des SAC IEX-Harzes ausmacht, durch das Volumen des innerhalb des Behälters eingeschlossenen SAC IEX-Harzes hindurch geleitet wurde.

12. Verfahren nach Anspruch 1, wobei die Selbstabscheidungsbadzusammensetzung durch das Bettvolumen des SAC IEX mit einer Rate von etwa 24 bis etwa 45 BV/h hindurch geleitet wird.

13. Verfahren nach Anspruch 1, **gekennzeichnet durch** Unterbrechen und Umkehren des Fließens der Selbstabscheidungsbadzusammensetzung, so dass die Selbstabscheidungsbadzusammensetzung **durch** das Bettvolumen des gelartigen, festen, stark sauren Kationen-Ionenaustauscherharzes (SAC IEX) in einer zur primären Fließrichtung entgegen gesetzten Fließrichtung fließt.

14. Verfahren nach Anspruch 13, das ferner umfasst:
Umkehren der Fließrichtung in die primäre Fließrichtung, nachdem das Fließen in der zur primären Fließrichtung entgegen gesetzten Fließrichtung erlaubt worden war während einer Zeit, die ausreicht, dass, wenn das Fließen des Selbstabscheidungsbades durch das Bettvolumen in die primäre Richtung umgekehrt wird, der Wirkdruck durch das Bettvolumen, der erforderlich ist, um eine zu Beginn gewählte Fließrate aufrecht zu erhalten, nicht den Wirkdruck überschreitet, der anfangs bei demselben Bettvolumen erforderlich war, als es mit mehr als 0,40 Bar/Meter der Bettvolumenlänge in der primären Fließrichtung frisch zubereitet wurde.

## Revendications

1. Procédé pour éliminer au moins l'un des cations de fer et de zinc à partir d'une composition de bain d'autodéposition, qui comprend : le passage de ladite composition de bain d'autodéposition dans une direction à travers un volume de lit d'une résine échangeuse de cations acides forts, solide, du type gel (SAC IEX) à un débit d'au moins 24 volumes de lit par heure (BV/h).

2. Procédé selon la revendication 1, dans lequel le passage de la composition de bain d'autodéposition dans une direction à travers le volume de lit de résine SAC IEX se réalise en faisant circuler la composition de bain d'autodéposition entre le volume de lit de résine SAC IEX et une cuve de bain qui ne contient pas la résine SAC IEX.

3. Procédé selon la revendication 2, par le biais duquel:
les cations de fer sont éliminés du bain d'autodéposition, qui comprend les étapes consistant :
(a) à faire circuler d'environ 15 à environ 30 BV de composition de bain d'autodéposition à travers le volume de lit de résine SAC IEX;
(b) à régénérer le volume de lit de résine SAC IEX en faisant passer de l'acide à travers le volume de lit; et
(c) à rincer le volume de lit régénéré de résine SAC IEX en faisant passer de l'eau à travers le volume de lit.

4. Procédé selon la revendication 2, dans lequel,
les cations de zinc sont éliminés de la composition de bain d'autodéposition, qui comprend les étapes consistant :
(a) à faire circuler pas plus d'environ 50 BV de composition de bain d'autodéposition à travers le volume de lit de résine SAC IEX dans une première direction d'écoulement; à inverser la direction d'écoulement de la composition de bain d'autodéposition à travers le volume de lit afin de dilater le volume de lit, à inverser l'écoulement de la composition de bain d'autodéposition vers la première direction;
(b) à régénérer le volume de lit de résine SAC IEX après avoir fait circuler au moins environ 100 BV de composition de bain d'autodéposition à travers le volume de lit de résine SAC IEX, en faisant passer de l'acide à travers le volume de lit; et
(c) à rincer le volume de lit régénéré de résine SAC IEX en faisant passer de l'eau à travers le volume de lit.

5. Procédé selon la revendication 3 ou 4, dans lequel le rinçage se poursuit jusqu'à ce que la conductivité de l'eau de rinçage émergeant du volume de lit soit inférieure à 50 µS.

6. Procédé selon la revendication 1, dans lequel :
ladite composition de bain d'autodéposition a été employée précédemment pour l'autodéposition et ne contient pas une concentration d'agent dispersant choisi dans le groupe formé par les tensio-actifs cationiques, les tensio-actifs amphotères et les colloïdes protecteurs qui feraient que la composition de bain d'autodéposition deviendrait instable en l'espace de 1 000 heures;
une valeur de concentration cible de régénération est choisie pour chaque élément parmi le fer et le zinc, au moins l'une desdites valeurs cibles de régénération étant inférieure à la concentration de l'élément correspondant dans ladite composition de bain d'autodéposition employée précédemment;
le volume de lit de résine SAC IEX est confiné, conjointement et en contact avec un volume connu d'un liquide à base aqueuse qui possède des concentrations en cations dissous de fer et de zinc, qui ne sont pas supérieures aux concentrations de cations dissous de fer et de zinc dans ladite composition de bain d'autodéposition usagée, dans un récipient qui y possède un ensemble, qui peut posséder un élément unique ou une pluralité d'éléments, de premières ouvertures perméables aux liquides, et un ensemble distinct, qui peut posséder un élément unique ou une pluralité d'éléments, de deuxièmes ouvertures perméables aux liquides, lesdits ensembles des premières et des deuxièmes ouvertures perméables aux liquides étant des ensembles mutuellement exclusifs, de sorte à pouvoir maintenir un écoulement de liquide à débit constant dans le récipient, successivement à travers ledit ensemble de premières ouvertures perméables aux liquides, en contact avec ledit volume de lit de résine SAC IEX confinée dans le récipient, et sortant du récipient à travers ledit ensemble de deuxièmes ouvertures perméables aux liquides, par des moyens produisant un écoulement de liquide, sans déplacer ainsi la résine SAC IEX à partir dudit récipient pour celle-ci;
ladite composition de bain d'autodéposition usagée est obligée de s'écouler au moins une fois à travers l'ensemble des premières ouvertures perméables aux liquides dans ledit récipient et en contact avec la résine SAC IEX qui y est confinée, convertissant ainsi la composition de bain d'autodéposition usagée en une composition de bain d'autodéposition usagée à teneur réduite en cations multivalents;
le liquide à base aqueuse en contact avec la résine échangeuse de cations est déplacé avant que la composition de bain d'autodéposition usagée ne soit obligée à s'écouler dans ledit récipient avec la composition de bain d'autodéposition et par la suite, après un volume débité égal audit volume connu dudit liquide à base aqueuse, ladite composition de bain d'autodéposition usagée à teneur réduite en cations multivalents est obligée de s'écouler hors dudit récipient, à travers ledit deuxième ensemble d'ouvertures perméables aux liquides, simultanément avec et à un débit qui est essentiellement identique au débit de ladite composition de bain d'autodéposition usagée dans ledit récipient, ces écoulements dans et hors dudit récipient se poursuivant, éventuellement avec :
(a) une ou plusieurs interruptions de l'écoulement, pendant lesquelles interruptions, l'écoulement est éventuellement inversé de sorte que la composition de bain d'autodéposition usagée s'écoule dans ledit récipient à travers ledit ensemble de deuxièmes ouvertures perméables aux liquides dans le récipient, et la composition de bain d'autodéposition à teneur réduite en cations multivalents s'écoule hors dudit récipient à travers ledit ensemble de premières ouvertures perméables aux liquides;
(b) une ou plusieurs itérations d'écoulement; ou
(c) à la fois une ou plusieurs de ces interruptions et une ou plusieurs de ces itérations,
jusqu'à ce que la concentration de chaque élément parmi le fer et le zinc dans l'effluent s'écoulant hors du récipient ait été réduite à ladite valeur de concentration cible de régénération, ou au-dessous de celle-ci, ledit effluent constituant ensuite une composition de bain d'autodéposition régénérée.

7. Procédé selon la composition 6, dans lequel :
le débit de la composition de bain d'autodéposition usagée dans ledit récipient, est un débit auquel il existe une capacité dynamique spécifique d'alimentation connue dudit volume de lit de ladite résine SAC IEX pour au moins un élément parmi le fer et le zinc, pour lequel la concentration cible de régénération choisie est inférieure à la concentration de l'élément correspondant dans ledit bain d'autodéposition; et
l'écoulement dudit bain d'autodéposition usagé dans ledit récipient se poursuit jusqu'à ce qu'une quantité dudit au moins un élément parmi le fer et le zinc pour lequel ladite capacité dynamique spécifique d'alimentation est connue qui correspond à au moins 25% de ladite capacité dynamique spécifique d'alimentation, ait été transférée à partir dudit volume de lit de la composition de bain d'autodéposition usagée en vue d'une liaison à la résine SAC IEX.

8. Procédé selon la revendication 7, dans lequel le débit d'écoulement de la composition de bain d'autodéposition usagée est d'au moins 30 BV/h.

9. Procédé selon la revendication 7, comprenant les opérations supplémentaires suivantes :
le choix d'une concentration de résine à dispersion maximale pouvant être autodéposée, d'une teneur minimale d'acide dans ladite résine échangeuse de cations à l'intérieur dudit récipient, d'un volume minimal de rinçage à rebours, et d'une valeur de concentration maximale post-régénération pour chaque élément parmi l'acide, le fer et le zinc; et
après achèvement du procédé selon la revendication 8, :
(1) un premier liquide de rinçage frais est obligé de s'écouler au moins une fois à travers l'un desdits ensembles de premières et deuxièmes ouvertures perméables aux liquides dans ledit récipient et en contact avec la résine SAC IEX qui y est confinée, convertissant ainsi le liquide frais de rinçage en un liquide de rinçage usagé; et
(2) le premier liquide de rinçage usagé est obligé de passer hors dudit récipient, à travers celui desdits ensembles des premières et deuxièmes conduites de liquide qui n'est pas employé pour l'entrée, simultanément avec et à un débit qui est sensiblement identique au débit de premier liquide de rinçage frais dans ledit récipient
les écoulements de premier liquide de rinçage frais dans ledit récipient et du premier liquide de rinçage usagé hors dudit récipient se poursuivant jusqu'à ce que le dernier incrément de premier liquide de rinçage usagé sortant ne contienne pas une concentration de résine dispersée pouvant être autodéposée, qui est supérieure à ladite concentration de résine ciblée pouvant être autodéposée, à dispersion maximale de la concentration; et
(3) par la suite, une solution acide de régénération fraîche est obligée de s'écouler au moins une fois à travers l'un desdits ensembles des premières et deuxièmes ouvertures perméables aux liquides dans ledit récipient et en contact avec la résine SAC IEX qui y est confinée, convertissant ainsi la solution acide de régénération fraîche en une solution acide de régénération usagée; et
(4) la solution acide de régénération usagée est obligée de passer hors dudit récipient, à travers l'un desdits ensembles de premières et deuxièmes ouvertures perméables aux liquides, qui n'est pas employé pour l'entrée, simultanément avec et à un débit qui est sensiblement identique au débit de la solution acide de régénération fraîche dans ledit récipient
les écoulements de solution acide de régénération fraîche dans ledit récipient et de solution acide de régénération usagée hors dudit récipient se poursuivant jusqu'à ce que la teneur en acide dudit volume de lit de résine SAC IEX ne soit pas inférieure à ladite teneur minimale cible en acide; et
(5) par la suite, un deuxième liquide de rinçage frais est obligé de s'écouler au moins une fois à travers l'un desdits ensembles de premières et deuxièmes ouvertures perméables aux liquides dans ledit récipient et en contact avec la résine SAC IEX qui y est confinée, convertissant ainsi le deuxième liquide de rinçage frais en un deuxième liquide de rinçage usagé, et
(6) le deuxième liquide de rinçage usagé est obligé de passer hors dudit récipient, à travers l'un desdits ensembles de premières et deuxièmes ouvertures perméables aux liquides, qui n'est pas employé pour l'entrée, simultanément avec, et à un débit qui est sensiblement identique au débit du deuxième liquide de rinçage frais dans ledit récipient,
les écoulements du deuxième liquide de rinçage frais dans ledit récipient et du deuxième liquide de rinçage usagé hors dudit récipient se poursuivant jusqu'à ce qu'un incrément dudit deuxième liquide de rinçage ne contienne pas plus de ladite valeur maximale post-régénération correspondante choisie pour un élément quelconque parmi l'acide, le fer ou le zinc,
un volume d'au moins l'un parmi ladite composition de bain d'autodéposition usagée, ledit premier liquide de rinçage, ledit liquide régénérant acide, et ledit deuxième liquide de rinçage, s'étant écoulé dans ledit récipient à travers ledit ensemble de deuxièmes ouvertures perméables aux liquides avant que le processus ne soit achevé.

10. Procédé selon la revendication 9, dans lequel :
(a) la valeur de concentration cible de régénération pour le zinc est inférieure à la concentration réelle du zinc dans la composition de bain d'autodéposition usagée; et
(b) un volume de bain d'autodéposition usagé qui est au moins environ 200 fois le BV de résine SAC IEX confiné à l'intérieur dudit récipient, a traversé ledit volume de résine SAC IEX confiné dans ledit récipient, mais pas plus de 90 fois le BV de résine SAC IEX confiné à l'intérieur dudit récipient, n'a traversé ledit volume dudit récipient dans une première direction d'écoulement le traversant sans avoir été interrompu par un intervalle pendant lequel de la composition de bain d'autodéposition usagée s'écoule dans une direction inverse à la première direction d'écoulement à travers le même volume de résine SAC IEX confiné à l'intérieur dudit récipient.

11. Procédé selon la revendication 9, dans lequel :
(a) la valeur de concentration cible de régénération pour le fer est inférieure à la concentration réelle du fer dans la composition de bain d'autodéposition usagée et
(b) un volume de bain d'autodéposition usagé qui est d'environ 10 à environ 30 fois le BV de ladite résine SAC IEX confiné à l'intérieur dudit récipient, a traversé ledit volume de résine SAC IEX confiné dans ledit récipient.

12. Procédé selon la revendication 1, dans lequel ladite composition de bain d'autodéposition est passée à travers le volume de lit de SAC IEX à un débit d'environ 24 à environ 45 BV/h.

13. Procédé selon la revendication 1, **caractérisé par** l'interruption et l'inversion de l'écoulement de ladite composition de bain d'autodéposition, de sorte que la composition de bain d'autodéposition s'écoule à travers le volume de lit d'une résine échangeuse d'ions, solide, à cations acides forts (SAC IEX), de type gel, dans une direction opposée à la direction principale d'écoulement.

14. Procédé selon la revendication 13, comprenant en outre le rétablissement de la direction d'écoulement vers la direction principale d'écoulement après avoir permis un écoulement dans la direction opposée à ladite direction principale pendant une durée suffisante de sorte que lorsque l'écoulement du bain d'autodéposition à travers le volume de lit est rétabli vers la direction principale, une perte de charge à travers le volume de lit nécessaire pour maintenir un débit choisi initialement, ne dépasse pas la perte de charge nécessaire initialement avec le même volume de lit lorsqu'il est fraîchement préparé, de plus de 0,40 bar/mètre de longueur de volume de lit dans la direction principale d'écoulement.
